# EUROPEAN PATENT SPECIFICATION

(11) **EP 3 908 861 B1**
(45) Date of publication and mention of the grant of the patent: **10.06.2026**
(21) Application number: 20738111.2
(22) Date of filing: 13.01.2020
(51) Int. Cl.: G01V 1/30, G06N 3/0464, G06N 3/0895, G06N 3/09

(54) **SEISMIC IMAGE DATA INTERPRETATION SYSTEM**
SYSTEM ZUR INTERPRETATION SEISMISCHER BILDDATEN
SYSTÈME D'INTERPRÉTATION DE DONNÉES D'IMAGE SISMIQUE

(30) Priority: 13.01.2019 US 201962791874 P
(43) Date of publication of application: 17.11.2021
(73) Proprietor: Services Pétroliers Schlumberger, 75007 Paris (FR); Geoquest Systems B.V., 2586 BJ The Hague (NL)
(72) Inventor: LI, Zhun, Houston, Texas 77056-2724 (US); DI, Haibin, Houston, Texas 77056-2724 (US); MANIAR, Hiren, Houston, Texas 77056-2724 (US); ABUBAKAR, Aria, Houston, Texas 77056-2724 (US)
(74) Representative: Schlumberger Intellectual Property Department
(86) International application number: PCT/US2020/013283
(87) International publication number: WO 2020/146863

(56) References cited:
- WO-A1-2018/148492
- WO-A1-2018/148492
- WO-A1-2020/123097
- US-A1- 2014 334 260
- US-A1- 2017 193 647
- US-A1- 2017 286 802
- LI WEICHANG: "Classifying geological structure elements from seismic images using deep learning", SEG TECHNICAL PROGRAM EXPANDED ABSTRACTS 2018, 27 August 2018 (2018-08-27), pages 4643 - 4648, XP055950572, DOI: 10.1190/segam2018-2998036.1
- HU LIANLIAN ET AL: "U-net convolutional networks for first arrival picking", 14 December 2018 (2018-12-14), pages 15 - 18, XP055951952, Retrieved from the Internet <URL:http://dx.doi.org/10.1190/AIML2018-04.1> [retrieved on 20220816], DOI: 10.1190/AIML2018-04.1
- BANDURA LAURA ET AL: "Machine learning in the interpreter's toolbox: Unsupervised, supervised, and deep-learning applications", SEG TECHNICAL PROGRAM EXPANDED ABSTRACTS 2018, 27 August 2018 (2018-08-27), pages 4633 - 4637, XP055950759, DOI: 10.1190/segam2018-2997015.1
- GHASSAN ALREGIB , MOHAMED DERICHE , ZHILING LONG , HAIBIN DI , ZHEN WANG , YAZEED ALAUDAH , MUHAMMAD AMIR SHAFIQ , MOTAZ ALFARRA: "Subsurface Structure Analysis Using Computational Interpretation and Learning: A Visual Signal Processing Perspective", IEEE SIGNAL PROCES SING MAGAZINE, vol. 35, no. 2, 12 March 2018 (2018-03-12), pages 82 - 98, XP011678898, ISSN: 1053-5888, DOI: 10.1109/MSP.2017.2785979
- KUO CHUN TSAI, WENYI HU, XUQING WU, JIEFU CHEN, ZHU HAN: "First-break automatic picking with deep semisupervised learning neural network", SEG TECHNICAL PROGRAM EXPANDED ABSTRACTS 2018, 27 August 2018 (2018-08-27), pages 2181 - 2185, XP055717293, ISSN: 1052-3812, DOI: 10.1190/segam2018-2998106.1

## Description

### RELATED APPLICATION

This application claims priority to and the benefit of a U.S. Provisional Application having Serial No. 62/791,874, filed 13 January 2019.

### BACKGROUND

In oil and gas exploration, interpretation is a process that involves analysis of data to identify and locate various subsurface structures (e.g., horizons, faults, geobodies, etc.) in a geologic environment. Various types of structures (e.g., stratigraphic formations) may be indicative of hydrocarbon traps or flow channels, as may be associated with one or more reservoirs (e.g., fluid reservoirs). In the field of resource extraction, enhancements to interpretation can allow for construction of a more accurate model of a subsurface region, which, in turn, may improve characterization of the subsurface region for purposes of resource extraction. Characterization of one or more subsurface regions in a geologic environment can guide, for example, performance of one or more operations (e.g., field operations, etc.). As an example, a more accurate model of a subsurface region may make a drilling operation more accurate as to a borehole's trajectory where the borehole is to have a trajectory that penetrates a reservoir, etc. LI WEICHANG: "Classifying geological structure elements from seismic images using deep learning", SEG TECHNICAL PROGRAM EXPANDED ABSTRACTS 2018, 27 August 2018, pages 4643-4648, discloses the classifying of geological structure elements from seismic images using deep learning. It teaches the use of an unsupervised auto-encoder network providing input to a supervised classifier which is based on a convolutional neural network. WO 2018/148492 A1 discloses implementing deep learning using unsupervised data pre-training of models to automate feature extraction. Hu Lianlian ET AL: "U-net convolutional networks for first arrival picking", SEG 2018 Workshop: SEG Maximizing Asset Value Through Artificial Intelligence and Machine Learning, Beijing, China, 17-19 September 2018, 14 December 2018, pages 15-18, XP55951952, discloses the use of U-net convolutional networks for first arrival picking.

### SUMMARY

The present invention resides in a method as defined in claim 1, a system as defined in claim 13 and one or more computer-readable storage media as defined in claim 14.

### BRIEF DESCRIPTION OF THE DRAWINGS

Features and advantages of the described implementations can be more readily understood by reference to the following description taken in conjunction with the accompanying drawings.
Fig. 1 illustrates an example system that includes various components for modeling a geologic environment and various equipment associated with the geologic environment;
Fig. 2 illustrates an example of a sedimentary basin, an example of a method, an example of a formation, an example of a borehole, an example of a borehole tool, an example of a convention and an example of a system;
Fig. 3 illustrates an example of a technique that may acquire data;
Fig. 4 illustrates examples of equipment including examples of downhole tools and examples of bores;
Fig. 5 illustrates examples of equipment including examples of downhole tools;
Fig. 6 illustrates an example of forward modeling and inversion as to seismic data and an Earth model of acoustic impedance;
Fig. 7 illustrates an example of a computational framework;
Fig. 8 illustrates an example of stratigraphy;
Fig. 9 illustrates an example of a method and an example of a plot;
Fig. 10 illustrates examples of GUIs;
Fig. 11 illustrates an example of a system and/or a method;
Fig. 12 illustrates examples of a system and/or a method;
Fig. 13 illustrates examples of labels with respect to stratigraphy and seismic image data;
Fig. 14 illustrates an example of a convolution neural network;
Fig. 15 illustrates an example of a layered earth model;
Fig. 16 illustrates an example of a system with respect to various images associated with a layered earth model;
Fig. 17 illustrates examples of graphics;
Fig. 18 illustrates examples of graphics;
Fig. 19 illustrates an example of a method and an example of a system;
Fig. 20 illustrates examples of equipment; and
Fig. 21 illustrates example components of a system and a networked system.

### DETAILED DESCRIPTION

This description is not to be taken in a limiting sense, but rather is made merely for the purpose of describing the general principles of the implementations. The scope of the described implementations should be ascertained with reference to the issued claims.

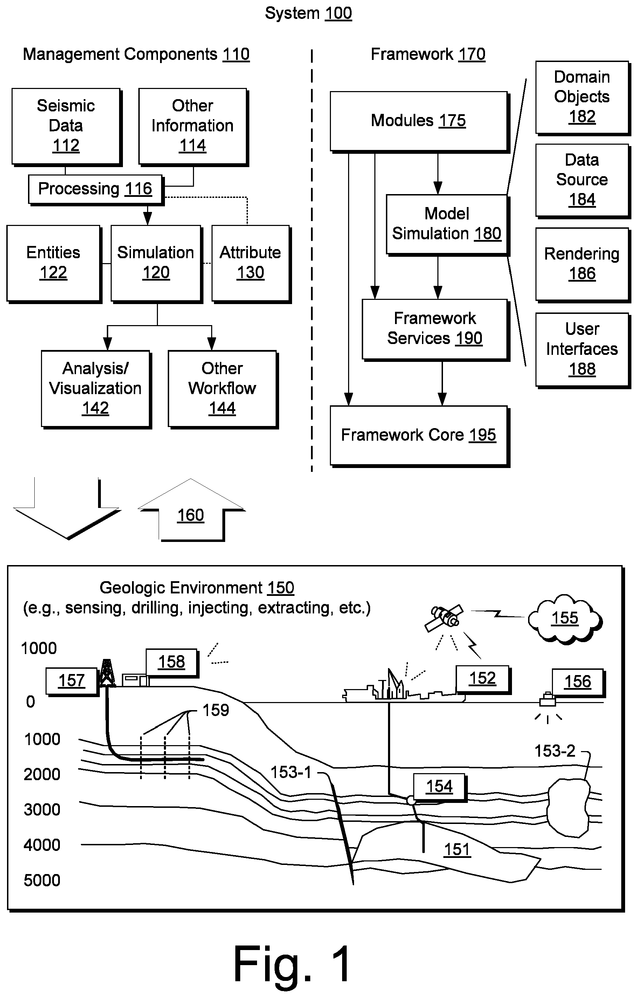

Fig. 1 shows an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Fig. 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, bodies, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. An example of an object-based framework is the MICROSOFT .NET framework (Redmond, Washington), which provides a set of extensible object classes. In the .NET framework, an object class encapsulates a module of reusable code and associated data structures. Object classes can be used to instantiate object instances for use in by a program, script, etc. For example, borehole classes may define objects for representing boreholes based on well data.

In the example of Fig. 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Fig. 1, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE reservoir simulator (Schlumberger Limited, Houston Texas), the INTERSECT reservoir simulator (Schlumberger Limited, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example embodiment, the management components 110 may include features of a framework such as the PETREL seismic to simulation software framework (Schlumberger Limited, Houston, Texas). The PETREL framework provides components that allow for optimization of exploration and development operations. The PETREL framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example embodiment, various aspects of the management components 110 may include add-ons or plug-ins that operate according to specifications of a framework environment. For example, a framework environment marketed as the OCEAN framework environment (Schlumberger Limited, Houston, Texas) allows for integration of add-ons (or plug-ins) into a PETREL framework workflow. The OCEAN framework environment leverages .NET tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

Fig. 1 also shows an example of a framework 170 that includes a model simulation layer 180 along with a framework services layer 190, a framework core layer 195 and a modules layer 175. The framework 170 may include the OCEAN framework where the model simulation layer 180 is the PETREL model-centric software package that hosts OCEAN framework applications. In an example embodiment, the PETREL software may be considered a data-driven application. The PETREL software can include a framework for model building and visualization.

As an example, seismic data may be processed using a framework such as the OMEGA framework (Schlumberger Limited, Houston, TX). The OMEGA framework provides features that can be implemented for processing of seismic data, for example, through prestack seismic interpretation and seismic inversion. A framework may be scalable such that it enables processing and imaging on a single workstation, on a massive compute cluster, etc. As an example, one or more techniques, technologies, etc. described herein may optionally be implemented in conjunction with a framework such as, for example, the OMEGA framework.

A framework for processing data may include features for 2D line and 3D seismic surveys. Modules for processing seismic data may include features for prestack seismic interpretation (PSI), optionally pluggable into a framework such as the OCEAN framework. A workflow may be specified to include processing via one or more frameworks, plug-ins, add-ons, etc. A workflow may include quantitative interpretation, which may include performing pre- and poststack seismic data conditioning, inversion (e.g., seismic to properties and properties to synthetic seismic), wedge modeling for thin-bed analysis, amplitude versus offset (AVO) and amplitude versus angle (AVA) analysis, reconnaissance, etc. As an example, a workflow may aim to output rock properties based at least in part on processing of seismic data. As an example, various types of data may be processed to provide one or more models (e.g., earth models). For example, consider processing of one or more of seismic data, well data, electromagnetic and magnetic telluric data, reservoir data, etc.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of Fig. 1, the model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

As an example, the domain objects 182 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of Fig. 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Fig. 1, the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Fig. 1 shows a satellite in communication with the network 155 that may be configured for communications, noting that the satellite may additionally or alternatively include circuitry for imagery (e.g., spatial, spectral, temporal, radiometric, etc.).

Fig. 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL software, for example, that operates on seismic data, seismic attribute(s), etc. As an example, a workflow may be a process implementable in the OCEAN framework. As an example, a workflow may include one or more worksteps that access a module such as a plug-in (e.g., external executable code, etc.).

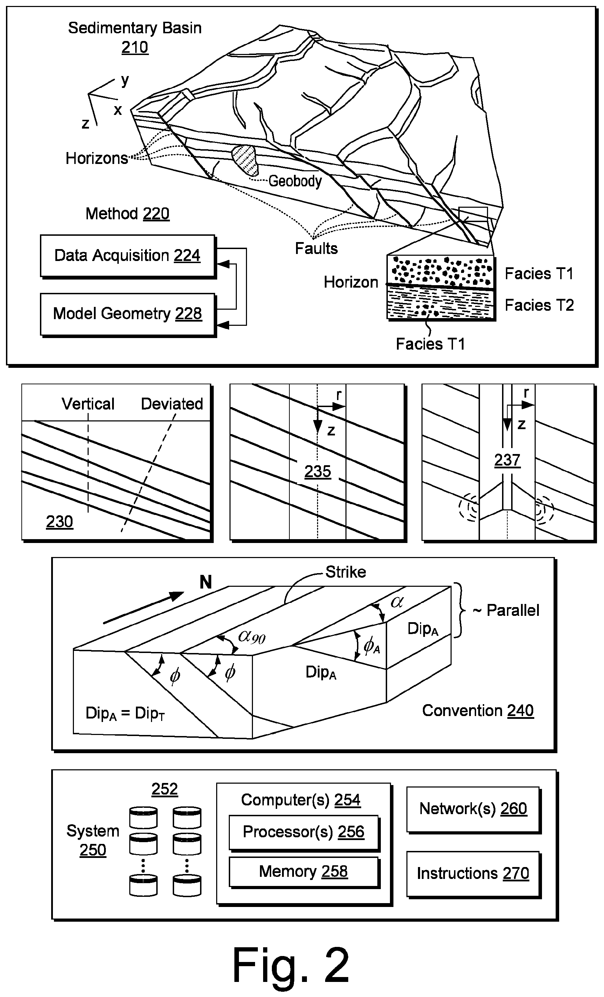

Fig. 2 shows an example of a sedimentary basin 210 (e.g., a geologic environment), an example of a method 220 for model building (e.g., for a simulator, etc.), an example of a formation 230, an example of a borehole 235 in a formation, an example of a convention 240 and an example of a system 250.

As an example, reservoir simulation, petroleum systems modeling, etc. may be applied to characterize various types of subsurface environments, including environments such as those of Fig. 1. One or more operations may be performed in an environment based at least in part on such characterization of a subsurface environment or environments (e.g., via acquired data, simulation, modeling, etc.).

In Fig. 2, the sedimentary basin 210, which is a geologic environment, includes horizons, faults, one or more geobodies and facies formed over some period of geologic time. These features are distributed in two or three dimensions in space, for example, with respect to a Cartesian coordinate system (e.g., x, y and z) or other coordinate system (e.g., cylindrical, spherical, etc.). As shown, the model building method 220 includes a data acquisition block 224 and a model geometry block 228. Some data may be involved in building an initial model and, thereafter, the model may optionally be updated in response to model output, changes in time, physical phenomena, additional data, etc. As an example, data for modeling may include one or more of the following: depth or thickness maps and fault geometries and timing from seismic, remote-sensing, electromagnetic, gravity, outcrop and well log data. Furthermore, data may include depth and thickness maps stemming from facies variations (e.g., due to seismic unconformities) assumed to following geological events ("iso" times) and data may include lateral facies variations (e.g., due to lateral variation in sedimentation characteristics).

To proceed to modeling of geological processes, data may be provided, for example, data such as geochemical data (e.g., temperature, kerogen type, organic richness, etc.), timing data (e.g., from paleontology, radiometric dating, magnetic reversals, rock and fluid properties, etc.) and boundary condition data (e.g., heat-flow history, surface temperature, paleowater depth, etc.).

In basin and petroleum systems modeling, quantities such as temperature, pressure and porosity distributions within the sediments may be modeled, for example, by solving partial differential equations (PDEs) using one or more numerical techniques. Modeling may also model geometry with respect to time, for example, to account for changes stemming from geological events (e.g., deposition of material, erosion of material, shifting of material, etc.).

A modeling framework marketed as the PETROMOD framework (Schlumberger Limited, Houston, Texas) includes features for input of various types of information (e.g., seismic, well, geological, etc.) to model evolution of a sedimentary basin. The PETROMOD framework provides for petroleum systems modeling via input of various data such as seismic data, well data and other geological data, for example, to model evolution of a sedimentary basin. The PETROMOD framework may predict if, and how, a reservoir has been charged with hydrocarbons, including, for example, the source and timing of hydrocarbon generation, migration routes, quantities, pore pressure and hydrocarbon type in the subsurface or at surface conditions. In combination with a framework such as the PETREL framework, workflows may be constructed to provide basin-to-prospect scale exploration solutions. Data exchange between frameworks can facilitate construction of models, analysis of data (e.g., PETROMOD framework data analyzed using PETREL framework capabilities), and coupling of workflows.

As shown in Fig. 2, the formation 230 includes a horizontal surface and various subsurface layers. As an example, a borehole may be vertical. As another example, a borehole may be deviated. In the example of Fig. 2, the borehole 235 may be considered a vertical borehole, for example, where the z-axis extends downwardly normal to the horizontal surface of the formation 230. As an example, a tool 237 may be positioned in a borehole, for example, to acquire information. As mentioned, a borehole tool may be configured to acquire electrical borehole images. As an example, the fullbore Formation Microlmager (FMI) tool (Schlumberger Limited, Houston, Texas) can acquire borehole image data. A data acquisition sequence for such a tool can include running the tool into a borehole with acquisition pads closed, opening and pressing the pads against a wall of the borehole, delivering electrical current into the material defining the borehole while translating the tool in the borehole, and sensing current remotely, which is altered by interactions with the material.

As an example, a borehole may be vertical, deviate and/or horizontal. As an example, a tool may be positioned to acquire information in a horizontal portion of a borehole. Analysis of such information may reveal vugs, dissolution planes (e.g., dissolution along bedding planes), stress-related features, dip events, etc. As an example, a tool may acquire information that may help to characterize a fractured reservoir, optionally where fractures may be natural and/or artificial (e.g., hydraulic fractures). Such information may assist with completions, stimulation treatment, etc. As an example, information acquired by a tool may be analyzed using a framework such as the TECHLOG framework (Schlumberger Limited, Houston, Texas).

As to the convention 240 for dip, as shown, the three dimensional orientation of a plane can be defined by its dip and strike. Dip is the angle of slope of a plane from a horizontal plane (e.g., an imaginary plane) measured in a vertical plane in a specific direction. Dip may be defined by magnitude (e.g., also known as angle or amount) and azimuth (e.g., also known as direction). As shown in the convention 240 of Fig. 2, various angles *ϕ* indicate angle of slope downwards, for example, from an imaginary horizontal plane (e.g., flat upper surface); whereas, dip refers to the direction towards which a dipping plane slopes (e.g., which may be given with respect to degrees, compass directions, etc.). Another feature shown in the convention of Fig. 2 is strike, which is the orientation of the line created by the intersection of a dipping plane and a horizontal plane (e.g., consider the flat upper surface as being an imaginary horizontal plane).

Some additional terms related to dip and strike may apply to an analysis, for example, depending on circumstances, orientation of collected data, etc. One term is "true dip" (see, e.g., Dip_{T} in the convention 240 of Fig. 2). True dip is the dip of a plane measured directly perpendicular to strike (see, e.g., line directed northwardly and labeled "strike" and angle *α₉₀*) and also the maximum possible value of dip magnitude. Another term is "apparent dip" (see, e.g., Dip_{A} in the convention 240 of Fig. 2). Apparent dip may be the dip of a plane as measured in any other direction except in the direction of true dip (see, e.g., *ϕ_{A}* as Dip_{A} for angle *α*); however, it is possible that the apparent dip is equal to the true dip (see, e.g., *ϕ* as Dip_{A} = Dip_{T} for angle *α₉₀* with respect to the strike). In other words, where the term apparent dip is used (e.g., in a method, analysis, algorithm, etc.), for a particular dipping plane, a value for "apparent dip" may be equivalent to the true dip of that particular dipping plane.

As shown in the convention 240 of Fig. 2, the dip of a plane as seen in a cross-section perpendicular to the strike is true dip (see, e.g., the surface with *ϕ* as Dip_{A} = Dip_{T} for angle *α₉₀* with respect to the strike). As indicated, dip observed in a cross-section in any other direction is apparent dip (see, e.g., surfaces labeled Dip_{A}). Further, as shown in the convention 240 of Fig. 2, apparent dip may be approximately 0 degrees (e.g., parallel to a horizontal surface where an edge of a cutting plane runs along a strike direction).

In terms of observing dip in wellbores, true dip is observed in wells drilled vertically. In wells drilled in any other orientation (or deviation), the dips observed are apparent dips (e.g., which are referred to by some as relative dips). In order to determine true dip values for planes observed in such boreholes, as an example, a vector computation (e.g., based on the borehole deviation) may be applied to one or more apparent dip values.

As mentioned, another term that finds use in sedimentological interpretations from borehole images is "relative dip" (e.g., Dip_{R}). A value of true dip measured from borehole images in rocks deposited in very calm environments may be subtracted (e.g., using vector-subtraction) from dips in a sand body. In such an example, the resulting dips are called relative dips and may find use in interpreting sand body orientation.

A convention such as the convention 240 may be used with respect to an analysis, an interpretation, an attribute, etc. (see, e.g., various blocks of the system 100 of Fig. 1). As an example, various types of features may be described, in part, by dip (e.g., sedimentary bedding, faults and fractures, cuestas, igneous dikes and sills, metamorphic foliation, etc.). As an example, dip may change spatially as a layer approaches a geobody. For example, consider a salt body that may rise due to various forces (e.g., buoyancy, etc.). In such an example, dip may trend upward as a salt body moves upward.

Data-based interpretation may aim to identify and/or classify one or more subsurface boundaries based at least in part on one or more dip parameters (e.g., angle or magnitude, azimuth, etc.). As an example, various types of features (e.g., sedimentary bedding, faults and fractures, cuestas, igneous dikes and sills, metamorphic foliation, etc.) may be described at least in part by angle, at least in part by azimuth, etc.

As an example, equations may be provided for petroleum expulsion and migration, which may be modeled and simulated, for example, with respect to a period of time. Petroleum migration from a source material (e.g., primary migration or expulsion) may include use of a saturation model where migration-saturation values control expulsion. Determinations as to secondary migration of petroleum (e.g., oil or gas), may include using hydrodynamic potential of fluid and accounting for driving forces that promote fluid flow. Such forces can include buoyancy gradient, pore pressure gradient, and capillary pressure gradient.

As shown in Fig. 2, the system 250 includes one or more information storage devices 252, one or more computers 254, one or more networks 260 and one or more sets of instructions 270. As to the one or more computers 254, each computer may include one or more processors (e.g., or processing cores) 256 and memory 258 for storing instructions (e.g., one or more of the one or more sets of instructions 270), for example, executable by at least one of the one or more processors 256. As an example, a computer may include one or more network interfaces (e.g., wired or wireless), one or more graphics cards, a display interface (e.g., wired or wireless), etc. As an example, imagery such as surface imagery (e.g., satellite, geological, geophysical, etc.) may be stored, processed, communicated, etc. As an example, data may include SAR data, GPS data, etc. and may be stored, for example, in one or more of the storage devices 252.

As an example, the one or more sets of instructions 270 may include instructions (e.g., stored in the memory 258) executable by one or more processors of the one or more processors 256 to instruct the system 250 to perform various actions. As an example, the system 250 may be configured such that the one or more sets of instructions 270 provide for establishing the framework 170 of Fig. 1 or a portion thereof. As an example, one or more methods, techniques, etc. may be performed using one or more sets of instructions, which may be, for example, one or more of the one or more sets of instructions 270 of Fig. 2.

As mentioned, seismic data may be acquired and analyzed to understand better subsurface structure of a geologic environment. Reflection seismology finds use in geophysics, for example, to estimate properties of subsurface formations. As an example, reflection seismology may provide seismic data representing waves of elastic energy (e.g., as transmitted by P-waves and S-waves, in a frequency range of approximately 1 Hz to approximately 100 Hz or optionally less than about 1 Hz and/or optionally more than about 100 Hz). Seismic data may be processed and interpreted, for example, to understand better composition, fluid content, extent and geometry of subsurface rocks.

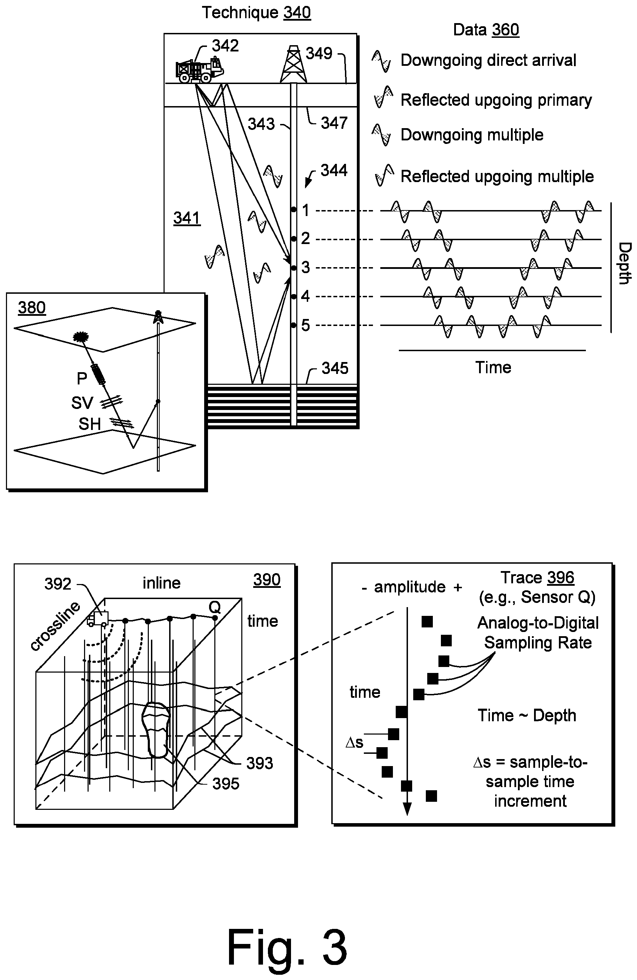

Fig. 3 shows an example of an acquisition technique 340 to acquire seismic data (see, e.g., data 360). As an example, a system may process data acquired by the technique 340, for example, to allow for direct or indirect management of sensing, drilling, injecting, extracting, etc., with respect to a geologic environment. In turn, further information about the geologic environment may become available as feedback (e.g., optionally as input to the system). As an example, an operation may pertain to a reservoir that exists in a geologic environment such as, for example, a reservoir. As an example, a technique may provide information (e.g., as an output) that may specifies one or more location coordinates of a feature in a geologic environment, one or more characteristics of a feature in a geologic environment, etc.

In Fig. 3, the technique 340 may be implemented with respect to a geologic environment 341. As shown, an energy source (e.g., a transmitter) 342 may emit energy where the energy travels as waves that interact with the geologic environment 341. As an example, the geologic environment 341 may include a bore 343 where one or more sensors (e.g., receivers) 344 may be positioned in the bore 343. As an example, energy emitted by the energy source 342 may interact with a layer (e.g., a structure, an interface, etc.) 345 in the geologic environment 341 such that a portion of the energy is reflected, which may then be sensed by one or more of the sensors 344. Such energy may be reflected as an upgoing primary wave (e.g., or "primary" or "singly" reflected wave). As an example, a portion of emitted energy may be reflected by more than one structure in the geologic environment and referred to as a multiple reflected wave (e.g., or "multiple"). For example, the geologic environment 341 is shown as including a layer 347 that resides below a surface layer 349. Given such an environment and arrangement of the source 342 and the one or more sensors 344, energy may be sensed as being associated with particular types of waves.

As an example, seismic data may include evidence of an interbed multiple from bed interfaces, evidence of a multiple from a water interface (e.g., an interface of a base of water and rock or sediment beneath it) or evidence of a multiple from an air-water interface, etc.

As shown in Fig. 3, the acquired data 360 can include data associated with downgoing direct arrival waves, reflected upgoing primary waves, downgoing multiple reflected waves and reflected upgoing multiple reflected waves. The acquired data 360 is also shown along a time axis and a depth axis. As indicated, in a manner dependent at least in part on characteristics of media in the geologic environment 341, waves travel at velocities over distances such that relationships may exist between time and space. Thus, time information, as associated with sensed energy, may allow for understanding spatial relations of layers, interfaces, structures, etc. in a geologic environment.

Fig. 3 also shows a diagram 380 that illustrates various types of waves as including P, SV an SH waves. As an example, a P-wave may be an elastic body wave or sound wave in which particles oscillate in the direction the wave propagates. As an example, P-waves incident on an interface (e.g., at other than normal incidence, etc.) may produce reflected and transmitted S-waves (e.g., "converted" waves). As an example, an S-wave or shear wave may be an elastic body wave, for example, in which particles oscillate perpendicular to the direction in which the wave propagates. S-waves may be generated by a seismic energy sources (e.g., other than an air gun). As an example, S-waves may be converted to P-waves. S-waves tend to travel more slowly than P-waves and do not travel through fluids that do not support shear. In general, recording of S-waves involves use of one or more receivers operatively coupled to earth (e.g., capable of receiving shear forces with respect to time). As an example, interpretation of S-waves may allow for determination of rock properties such as fracture density and orientation, Poisson's ratio and rock type, for example, by crossplotting P-wave and S-wave velocities, and/or by other techniques.

As an example of parameters that can characterize anisotropy of media (e.g., seismic anisotropy, etc.), consider the Thomsen parameters ε, δ and γ. The Thomsen parameter δ can describe offset effects (e.g., short offset). As to the Thomsen parameter ε, it can describe offset effects (e.g., a long offset) and can relate to a difference between vertical and horizontal compressional waves (e.g., P or P-wave or quasi compressional wave qP or qP-wave). As to the Thomsen parameter γ, it can describe a shear wave effect. For example, consider an effect as to a horizontal shear wave with horizontal polarization to a vertical shear wave.

As an example, an inversion technique may be applied to generate a model that may include one or more parameters such as one or more of the Thomsen parameters. For example, one or more types of data may be received and used in solving an inverse problem that outputs a model (e.g., a reflectivity model, an impedance model, a fluid flow model, etc.).

In the example of Fig. 3, a diagram 390 shows acquisition equipment 392 emitting energy from a source (e.g., a transmitter) and receiving reflected energy via one or more sensors (e.g., receivers) strung along an inline direction. As the region includes layers 393 and, for example, the geobody 395, energy emitted by a transmitter of the acquisition equipment 392 can reflect off the layers 393 and the geobody 395. Evidence of such reflections may be found in the acquired traces. As to the portion of a trace 396, energy received may be discretized by an analog-to-digital converter that operates at a sampling rate. For example, the acquisition equipment 392 may convert energy signals sensed by sensor Q to digital samples at a rate of one sample per approximately 4 ms. Given a speed of sound in a medium or media, a sample rate may be converted to an approximate distance. For example, the speed of sound in rock may be on the order of around 5 km per second. Thus, a sample time spacing of approximately 4 ms would correspond to a sample "depth" spacing of about 10 meters (e.g., assuming a path length from source to boundary and boundary to sensor). As an example, a trace may be about 4 seconds in duration; thus, for a sampling rate of one sample at about 4 ms intervals, such a trace would include about 1000 samples where latter acquired samples correspond to deeper reflection boundaries. If the 4 second trace duration of the foregoing example is divided by two (e.g., to account for reflection), for a vertically aligned source and sensor, the deepest boundary depth may be estimated to be about 10 km (e.g., assuming a speed of sound of about 5 km per second).

A 4D seismic survey involves acquisition of 3D seismic data at different times over a particular area. Such an approach can allow for assessing changes in a producing hydrocarbon reservoir with respect to time. As an example, changes may be observed in one or more of fluid location and saturation, pressure and temperature. 4D seismic data can be considered to be a form of time-lapse seismic data.

As an example, a seismic survey and/or other data acquisition may be for onshore and/or offshore geologic environments. As to offshore, streamers, seabed cables, nodes and/or other equipment may be utilized. As an example, nodes can be utilized as an alternative and/or in addition to seabed cables, which have been installed in several fields to acquire 4D seismic data. Nodes can be deployed to acquire seismic data (e.g., 4D seismic data) and can be retrievable after acquisition of the seismic data. As an example, a 4D seismic survey may call for one or more processes aimed at repeatability of data. A 4D survey can include two phases: a baseline survey phase and a monitor survey phase.

As an example, seismic data may be processed in a technique called "depth imaging" to form an image (e.g., a depth image) of reflection amplitudes in a depth domain for a particular target structure (e.g., a geologic subsurface region of interest).

As an example, seismic data may be processed to obtain an elastic model pertaining to elastic properties of a geologic subsurface region. For example, consider elastic properties such as density, compressional (P) impedance, compression velocity (vₚ)-to-shear velocity (vₛ) ratio, anisotropy, etc. As an example, an elastic model can provide various insights as to a surveyed region's lithology, reservoir quality, fluids, etc.

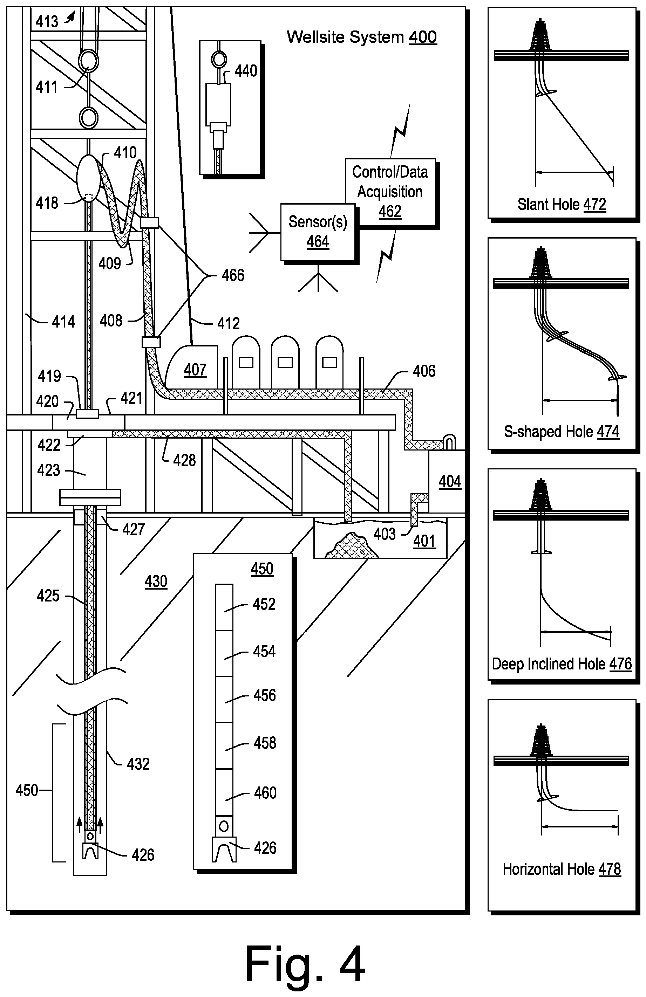

Fig. 4 shows an example of a wellsite system 400 (e.g., at a wellsite that may be onshore or offshore). As shown, the wellsite system 400 can include a mud tank 401 for holding mud and other material (e.g., where mud can be a drilling fluid), a suction line 403 that serves as an inlet to a mud pump 404 for pumping mud from the mud tank 401 such that mud flows to a vibrating hose 406, a drawworks 407 for winching drill line or drill lines 412, a standpipe 408 that receives mud from the vibrating hose 406, a kelly hose 409 that receives mud from the standpipe 408, a gooseneck or goosenecks 410, a traveling block 411, a crown block 413 for carrying the traveling block 411 via the drill line or drill lines 412, a derrick 414, a kelly 418 or a top drive 440, a kelly drive bushing 419, a rotary table 420, a drill floor 421, a bell nipple 422, one or more blowout preventors (BOPs) 423, a drillstring 425, a drill bit 426, a casing head 427 and a flow pipe 428 that carries mud and other material to, for example, the mud tank 401.

In the example system of Fig. 4, a borehole 432 is formed in subsurface formations 430 by rotary drilling; noting that various example embodiments may also use directional drilling.

As shown in the example of Fig. 4, the drillstring 425 is suspended within the borehole 432 and has a drillstring assembly 450 that includes the drill bit 426 at its lower end. As an example, the drillstring assembly 450 may be a bottom hole assembly (BHA).

The wellsite system 400 can provide for operation of the drillstring 425 and other operations. As shown, the wellsite system 400 includes the traveling block 411 and the derrick 414 positioned over the borehole 432. As mentioned, the wellsite system 400 can include the rotary table 420 where the drillstring 425 passes through an opening in the rotary table 420.

As shown in the example of Fig. 4, the wellsite system 400 can include the kelly 418 and associated components, etc., or a top drive 440 and associated components. As to a kelly example, the kelly 418 may be a square or hexagonal metal/alloy bar with a hole drilled therein that serves as a mud flow path. The kelly 418 can be used to transmit rotary motion from the rotary table 420 via the kelly drive bushing 419 to the drillstring 425, while allowing the drillstring 425 to be lowered or raised during rotation. The kelly 418 can pass through the kelly drive bushing 419, which can be driven by the rotary table 420. As an example, the rotary table 420 can include a master bushing that operatively couples to the kelly drive bushing 419 such that rotation of the rotary table 420 can turn the kelly drive bushing 419 and hence the kelly 418. The kelly drive bushing 419 can include an inside profile matching an outside profile (e.g., square, hexagonal, etc.) of the kelly 418; however, with slightly larger dimensions so that the kelly 418 can freely move up and down inside the kelly drive bushing 419.

As to a top drive example, the top drive 440 can provide functions performed by a kelly and a rotary table. The top drive 440 can turn the drillstring 425. As an example, the top drive 440 can include one or more motors (e.g., electric and/or hydraulic) connected with appropriate gearing to a short section of pipe called a quill, that in turn may be screwed into a saver sub or the drillstring 425 itself. The top drive 440 can be suspended from the traveling block 411, so the rotary mechanism is free to travel up and down the derrick 414. As an example, a top drive 440 may allow for drilling to be performed with more joint stands than a kelly/rotary table approach.

In the example of Fig. 4, the mud tank 401 can hold mud, which can be one or more types of drilling fluids. As an example, a wellbore may be drilled to produce fluid, inject fluid or both (e.g., hydrocarbons, minerals, water, etc.).

In the example of Fig. 4, the drillstring 425 (e.g., including one or more downhole tools) may be composed of a series of pipes threadably connected together to form a long tube with the drill bit 426 at the lower end thereof. As the drillstring 425 is advanced into a wellbore for drilling, at some point in time prior to or coincident with drilling, the mud may be pumped by the pump 404 from the mud tank 401 (e.g., or other source) via a the lines 406, 408 and 409 to a port of the kelly 418 or, for example, to a port of the top drive 440. The mud can then flow via a passage (e.g., or passages) in the drillstring 425 and out of ports located on the drill bit 426 (see, e.g., a directional arrow). As the mud exits the drillstring 425 via ports in the drill bit 426, it can then circulate upwardly through an annular region between an outer surface(s) of the drillstring 425 and surrounding wall(s) (e.g., open borehole, casing, etc.), as indicated by directional arrows. In such a manner, the mud lubricates the drill bit 426 and carries heat energy (e.g., frictional or other energy) and formation cuttings to the surface where the mud (e.g., and cuttings) may be returned to the mud tank 401, for example, for recirculation (e.g., with processing to remove cuttings, etc.).

The mud pumped by the pump 404 into the drillstring 425 may, after exiting the drillstring 425, form a mudcake that lines the wellbore which, among other functions, may reduce friction between the drillstring 425 and surrounding wall(s) (e.g., borehole, casing, etc.). A reduction in friction may facilitate advancing or retracting the drillstring 425. During a drilling operation, the entire drill string 425 may be pulled from a wellbore and optionally replaced, for example, with a new or sharpened drill bit, a smaller diameter drill string, etc. As mentioned, the act of pulling a drill string out of a hole or replacing it in a hole is referred to as tripping. A trip may be referred to as an upward trip or an outward trip or as a downward trip or an inward trip depending on trip direction.

As an example, consider a downward trip where upon arrival of the drill bit 426 of the drill string 425 at a bottom of a wellbore, pumping of the mud commences to lubricate the drill bit 426 for purposes of drilling to enlarge the wellbore. As mentioned, the mud can be pumped by the pump 404 into a passage of the drillstring 425 and, upon filling of the passage, the mud may be used as a transmission medium to transmit energy, for example, energy that may encode information as in mud-pulse telemetry.

As an example, mud-pulse telemetry equipment may include a downhole device configured to effect changes in pressure in the mud to create an acoustic wave or waves upon which information may modulated. In such an example, information from downhole equipment (e.g., one or more modules of the drillstring 425) may be transmitted uphole to an uphole device, which may relay such information to other equipment for processing, control, etc.

As an example, telemetry equipment may operate via transmission of energy via the drillstring 425 itself. For example, consider a signal generator that imparts coded energy signals to the drillstring 425 and repeaters that may receive such energy and repeat it to further transmit the coded energy signals (e.g., information, etc.).

As an example, the drillstring 425 may be fitted with telemetry equipment 452 that includes a rotatable drive shaft, a turbine impeller mechanically coupled to the drive shaft such that the mud can cause the turbine impeller to rotate, a modulator rotor mechanically coupled to the drive shaft such that rotation of the turbine impeller causes said modulator rotor to rotate, a modulator stator mounted adjacent to or proximate to the modulator rotor such that rotation of the modulator rotor relative to the modulator stator creates pressure pulses in the mud, and a controllable brake for selectively braking rotation of the modulator rotor to modulate pressure pulses. In such example, an alternator may be coupled to the aforementioned drive shaft where the alternator includes at least one stator winding electrically coupled to a control circuit to selectively short the at least one stator winding to electromagnetically brake the alternator and thereby selectively brake rotation of the modulator rotor to modulate the pressure pulses in the mud.

In the example of Fig. 4, an uphole control and/or data acquisition system 462 may include circuitry to sense pressure pulses generated by telemetry equipment 452 and, for example, communicate sensed pressure pulses or information derived therefrom for process, control, etc.

The assembly 450 of the illustrated example includes a logging-while-drilling (LWD) module 454, a measuring-while-drilling (MWD) module 456, an optional module 458, a rotary steerable system and motor 460 (RSS), and the drill bit 426.

The LWD module 454 may be housed in a suitable type of drill collar and can contain one or a plurality of selected types of logging tools. It will also be understood that more than one LWD and/or MWD module can be employed, for example, as represented at by the module 456 of the drillstring assembly 450. Where the position of an LWD module is mentioned, as an example, it may refer to a module at the position of the LWD module 454, the module 456, etc. An LWD module can include capabilities for measuring, processing, and storing information, as well as for communicating with the surface equipment. In the illustrated example, the LWD module 454 may include a seismic measuring device.

The MWD module 456 may be housed in a suitable type of drill collar and can contain one or more devices for measuring characteristics of the drillstring 425 and the drill bit 426. As an example, the MWD tool 454 may include equipment for generating electrical power, for example, to power various components of the drillstring 425. As an example, the MWD tool 454 may include the telemetry equipment 452, for example, where the turbine impeller can generate power by flow of the mud; it being understood that other power and/or battery systems may be employed for purposes of powering various components. As an example, the MWD module 456 may include one or more of the following types of measuring devices: a weight-on-bit measuring device, a torque measuring device, a vibration measuring device, a shock measuring device, a stick slip measuring device, a direction measuring device, and an inclination measuring device.

As to a RSS, various types of suitable rotary steerable tool configurations may be used. For example, a RSS may include a substantially non-rotating (or slowly rotating) outer housing employing blades that engage the wellbore wall. Engagement of the blades with the wellbore wall is intended to eccenter the tool body, thereby pointing or pushing the drill bit in a desired direction while drilling. A rotating shaft deployed in the outer housing transfers rotary power and axial weight-on-bit to the drill bit during drilling. Accelerometer and magnetometer sets may be deployed in the outer housing and therefore are non-rotating or rotate slowly with respect to the wellbore wall. As an example, a RSS such as the POWERDRIVE rotary steerable systems (Schlumberger Limited, Houston, Texas) can fully rotate with a drill string (e.g., an outer housing rotates with the drill string). As an example, a RSS can make use of an internal steering mechanism that can operate without demand of contact with a wellbore wall and can enable a tool body to fully rotate with the drill string. As an example, a RSS can include features that provide for the use of mud actuated blades (or pads) that contact a wellbore wall. The extension of the blades (or pads) can be rapidly and continually adjusted as such a system rotates in a wellbore. As an example, a RSS can include and make use of a lower steering section joined at a swivel with an upper section. Such a swivel can be actively tilted via pistons so as to change angle of a lower section with respect to the upper section and maintain a desired drilling direction as the BHA rotates in a wellbore. As an example, one or more accelerometer and magnetometer sets may rotate with the drill string or may alternatively be deployed in an internal roll-stabilized housing such that they remain substantially stationary (in a bias phase) or rotate slowly with respect to the wellbore (in a neutral phase). To drill a desired curvature, the bias phase and neutral phase can be alternated during drilling at a predetermined ratio (referred to as the steering ratio (SR)).

As an example, deviation of a bore may be accomplished in part by use of a downhole motor and/or a turbine. As to a motor, for example, a drillstring can include a positive displacement motor (PDM). The deviation may also be accomplished by using a rotary steerable system (RSS).

Fig. 4 also shows some examples of types of holes that may be drilled, for example, with a deviated bore. As shown in Fig. 4, the examples include a slant hole 472, an S-shaped hole 474, a deep inclined hole 476 and a horizontal hole 478.

As an example, a drilling operation can include directional drilling where, for example, at least a portion of a well includes a curved axis. For example, consider a radius that defines curvature where an inclination with regard to the vertical may vary until reaching an angle between about 30 degrees and about 60 degrees or, for example, an angle to about 90 degrees or possibly greater than about 90 degrees.

As an example, a directional well can include several shapes where each of the shapes may aim to meet particular operational demands. As an example, a drilling process may be performed on the basis of information as and when it is relayed to a drilling engineer. As an example, inclination and/or direction may be modified based on information received during a drilling process.

The coupling of sensors providing information on the course of a well trajectory, in real time or near real time, with, for example, one or more logs characterizing the formations from a geological viewpoint, can allow for implementing a geosteering method. Such a method can include navigating a subsurface environment, for example, to follow a desired route to reach a desired target or targets.

As an example, a drillstring can include an azimuthal density neutron (ADN) tool for measuring density and porosity; a MWD tool for measuring inclination, azimuth and shocks; a compensated dual resistivity (CDR) tool for measuring resistivity and gamma ray related phenomena; one or more variable gauge stabilizers; one or more bend joints; and a geosteering tool, which may include a motor and optionally equipment for measuring and/or responding to one or more of inclination, resistivity and gamma ray related phenomena.

As an example, geosteering can include intentional directional control of a wellbore based on results of downhole geological logging measurements in a manner that aims to keep a directional wellbore within a desired region, zone (e.g., a pay zone), etc. As an example, geosteering may include directing a wellbore to keep the wellbore in a particular section of a reservoir, for example, to minimize gas and/or water breakthrough and, for example, to maximize economic production from a well that includes the wellbore.

Referring again to Fig. 4, the wellsite system 400 can include one or more sensors 464 that are operatively coupled to the control and/or data acquisition system 462. As an example, a sensor or sensors may be at surface locations. As an example, a sensor or sensors may be at downhole locations. As an example, a sensor or sensors may be at one or more remote locations that are not within a distance of the order of about one hundred meters from the wellsite system 400. As an example, a sensor or sensor may be at an offset wellsite where the wellsite system 400 and the offset wellsite are in a common field (e.g., oil and/or gas field).

As an example, one or more of the sensors 464 can be provided for tracking pipe, tracking movement of at least a portion of a drillstring, etc.

As an example, the system 400 can include one or more sensors 466 that can sense and/or transmit signals to a fluid conduit such as a drilling fluid conduit (e.g., a drilling mud conduit). For example, in the system 400, the one or more sensors 466 can be operatively coupled to portions of the standpipe 408 through which mud flows. As an example, a downhole tool can generate pulses that can travel through the mud and be sensed by one or more of the one or more sensors 466. In such an example, the downhole tool can include associated circuitry such as, for example, encoding circuitry that can encode signals, for example, to reduce demands as to transmission. As an example, circuitry at the surface may include decoding circuitry to decode encoded information transmitted at least in part via mud-pulse telemetry. As an example, circuitry at the surface may include encoder circuitry and/or decoder circuitry and circuitry downhole may include encoder circuitry and/or decoder circuitry. As an example, the system 400 can include a transmitter that can generate signals that can be transmitted downhole via mud (e.g., drilling fluid) as a transmission medium.

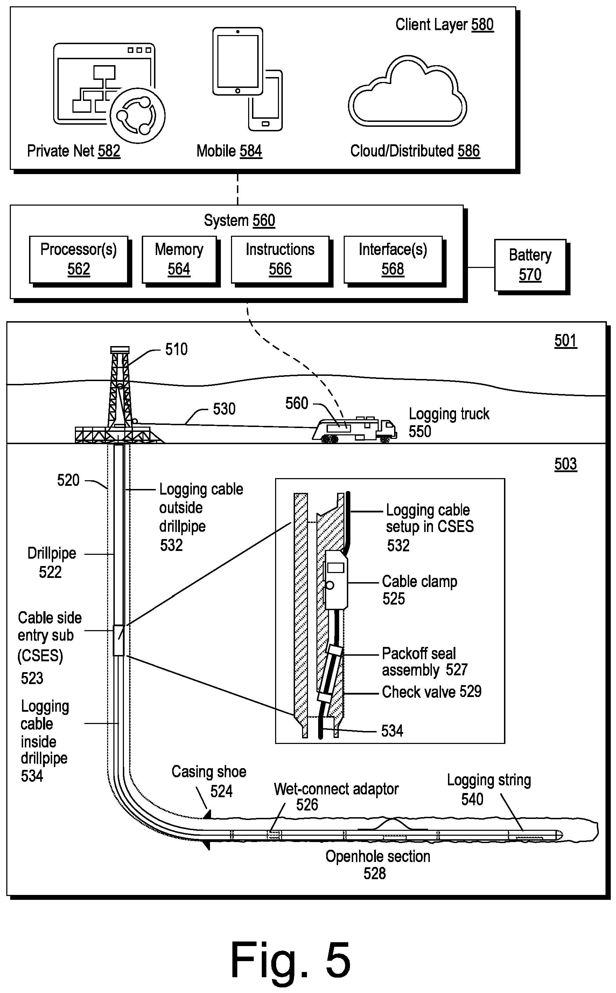

Fig. 5 shows an example of an environment 501 that includes a subterranean portion 503 where a rig 510 is positioned at a surface location above a bore 520. In the example of Fig. 5, various wirelines services equipment can be operated to perform one or more wirelines services including, for example, acquisition of data from one or more positions within the bore 520.

In the example of Fig. 5, the bore 520 includes drillpipe 522, a casing shoe, a cable side entry sub (CSES) 523, a wet-connector adaptor 526 and an openhole section 528. As an example, the bore 520 can be a vertical bore or a deviated bore where one or more portions of the bore may be vertical and one or more portions of the bore may be deviated, including substantially horizontal.

In the example of Fig. 5, the CSES 523 includes a cable clamp 525, a packoff seal assembly 527 and a check valve 529. These components can provide for insertion of a logging cable 530 that includes a portion 532 that runs outside the drillpipe 522 to be inserted into the drillpipe 522 such that at least a portion 534 of the logging cable runs inside the drillpipe 522. In the example of Fig. 5, the logging cable 530 runs past the wet-connect adaptor 526 and into the openhole section 528 to a logging string 540.

As shown in the example of Fig. 5, a logging truck 550 (e.g., a wirelines services vehicle) can deploy the wireline 530 under control of a system 560. As shown in the example of Fig. 5, the system 560 can include one or more processors 562, memory 564 operatively coupled to at least one of the one or more processors 562, instructions 566 that can be, for example, stored in the memory 564, and one or more interfaces 568. As an example, the system 560 can include one or more processor-readable media that include processor-executable instructions executable by at least one of the one or more processors 562 to cause the system 560 to control one or more aspects of equipment of the logging string 540 and/or the logging truck 550. In such an example, the memory 564 can be or include the one or more processor-readable media where the processor-executable instructions can be or include instructions. As an example, a processor-readable medium can be a computer-readable storage medium that is not a signal and that is not a carrier wave.

Fig. 5 also shows a battery 570 that may be operatively coupled to the system 560, for example, to power the system 560. As an example, the battery 570 may be a back-up battery that operates when another power supply is unavailable for powering the system 560 (e.g., via a generator of the wirelines truck 550, a separate generator, a power line, etc.). As an example, the battery 570 may be operatively coupled to a network, which may be a cloud network. As an example, the battery 570 can include smart battery circuitry and may be operatively coupled to one or more pieces of equipment via a SMBus or other type of bus.

As an example, the system 560 can be operatively coupled to a client layer 580. In the example of Fig. 5, the client layer 580 can include features that allow for access and interactions via one or more private networks 582, one or more mobile platforms and/or mobile networks 584 and via the "cloud" 586, which may be considered to include distributed equipment that forms a network such as a network of networks. As an example, the system 560 can include circuitry to establish a plurality of connections (e.g., sessions). As an example, connections may be via one or more types of networks. As an example, connections may be client-server types of connections where the system 560 operates as a server in a client-server architecture. For example, clients may log-in to the system 560 where multiple clients may be handled, optionally simultaneously.

As an example, a seismic workflow may provide for processing of microseismic data as a type of seismic data. Microseismic monitoring (e.g., a type of seismic survey) provides a valuable tool to evaluate hydraulic fracture treatments in real-time and can be utilized in planning and managing reservoir development. Microseismic event locations, source characteristics and attributes provide can provide estimates of hydraulic fracturing geometry that can be evaluated with respect to a completion plan and expected fracture growth. Microseismic event derived attributes such as fracture azimuth, height and length, location and complexity, may be utilized to determine the extent of fracture coverage of the reservoir target and effective stimulated volume, as well as in diagnosing under-stimulated sections of the reservoir and in planning re-stimulation of under-producing perforations and wells. Microseismic event locations can also help to avoid hazards during stimulation (e.g. faults, karst, aquifers, etc.). As an example, a method can include modifications to one or more treatment plans and operations based at least in part on microseismic interpretations as part of a seismic interpretation workflow.

Integrated workflows leveraging multi-scale, multi-domain measurements and microseismic interpretation can allow for optimization of hydraulic fracturing treatment for increased production. Such integrated completions planning workflows may use a wide variety of information about the geology (e.g., lithology, stress contrast, natural fracturing, structural or depositional dip, faulting), and the associated rock properties, (e.g., noise, slowness, anisotropy, attenuation) to improve hydraulic fracturing operations to lead to improved hydraulic fracture stimulations, completion plans, and well placement and, thereby, improved production. As an example, microseismic event locations and attributes may be integrated and compared with treatment pressure records, proppant concentration, and injection rate to better perform field operations.

Figs. 1, 2, 3, 4 and 5 show various examples of equipment in various examples of environments. As an example, one or more workflows may be implemented to perform operations using equipment in one or more environments. As an example, a workflow may aim to understand an environment. As an example, a workflow can include performing a seismic survey, which may be land-based, sea-based (e.g., vessel, ocean bottom, etc.) or land and sea-based. As an example, a seismic survey can include an acquisition geometry where receivers and/or sources are positioned according to the acquisition geometry. As an example, a seismic survey may be performed using one or more receivers and/or one or more sources positioned in a subterranean environment, for example, in a borehole. As an example, a workflow can include acquiring various types of data, which may include seismic data as a type of data and one or more other types of geophysical data, which may include imagery data (e.g., borehole imagery, satellite imagery, drone imagery, etc.).

As an example, a workflow may aim to drill into an environment, for example, to form a bore defined by surrounding earth (e.g., rock, fluids, etc.). As an example, a workflow may aim to acquire data from a downhole tool disposed in a bore where such data may be acquired via a drilling tool (e.g., as part of a bottom hole assembly) and/or a wireline tool. As an example, a workflow may aim to support a bore, for example, via casing. As an example, a workflow may aim to fracture an environment, for example, via injection of fluid. As an example, a workflow may aim to produce fluids from an environment via a bore. As an example, a workflow may utilize one or more frameworks that operate at least in part via a computer (e.g., a computing device, a computing system, etc.).

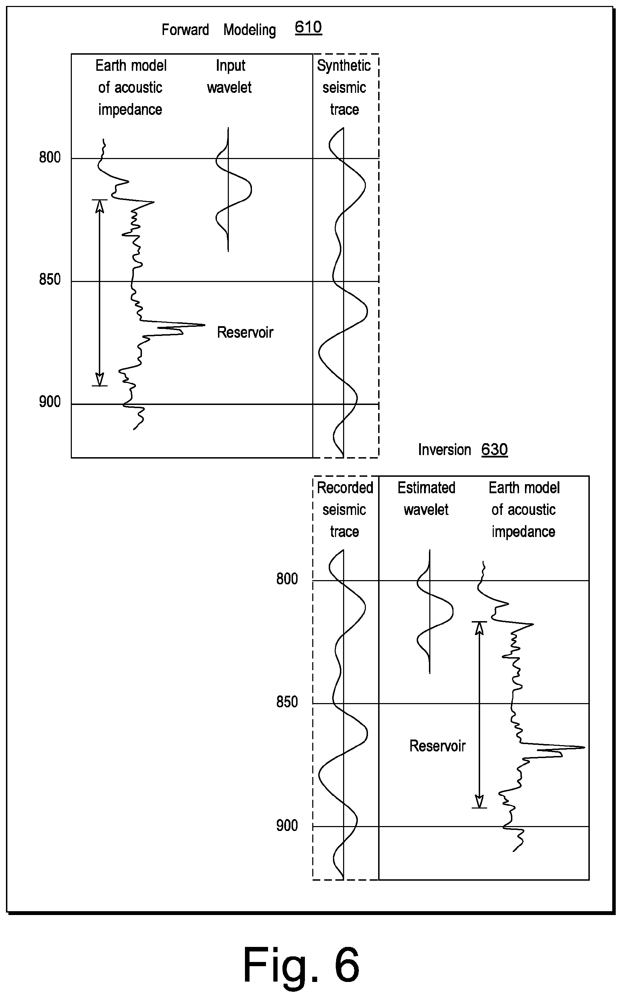

Fig. 6 shows an example of forward modeling 610 and an example of inversion 630 (e.g., an inversion or inverting). As shown, the forward modeling 610 progresses from an earth model of acoustic impedance and an input wavelet to a synthetic seismic trace while the inversion 630 progresses from a recorded seismic trace to an estimated wavelet and an earth model of acoustic impedance. As an example, forward modeling can take a model of formation properties (e.g., acoustic impedance as may be available from well logs) and combine such information with a seismic wavelength (e.g., a pulse) to output one or more synthetic seismic traces while inversion can commence with a recorded seismic trace, account for effect(s) of an estimated wavelet (e.g., a pulse) to generate values of acoustic impedance for a series of points in time (e.g., depth).

As an example, a method may employ amplitude inversion. For example, an amplitude inversion method may receive arrival times and amplitude of reflected seismic waves at a plurality of reflection points to solve for relative impedances of a formation bounded by the imaged reflectors. Such an approach may be a form of seismic inversion for reservoir characterization, which may assist in generation of models of rock properties.

As an example, an inversion process can commence with forward modeling, for example, to provide a model of layers with estimated formation depths, thicknesses, densities and velocities, which may, for example, be based at least in part on information such as well log information. A model may account for compressional wave velocities and density, which may be used to invert for P-wave, or acoustic, impedance. As an example, a model can account for shear velocities and, for example, solve for S-wave, or elastic, impedance. As an example, a model may be combined with a seismic wavelet (e.g., a pulse) to generate a synthetic seismic trace.

Inversion can aim to generate a "best-fit" model by, for example, iterating between forward modeling and inversion while seeking to minimize differences between a synthetic trace or traces and actual seismic data.

As an example, a framework such as the ISIS inversion framework (Schlumberger Limited, Houston Texas) may be implemented to perform an inversion. As an example, a framework such as the Linearized Orthotropic Inversion framework (Schlumberger Limited, Houston, Texas) may be implemented to perform an inversion.

As mentioned above, as to seismic data, forward modeling can include receiving an earth model of acoustic impedance and an input wavelet to a synthetic seismic trace while inverting can include progressing from a recorded seismic trace to an estimated wavelet and an earth model of acoustic impedance.

As an example, another approach to forward modeling and inversion can be for measurements acquired at least in part via a downhole tool where such measurements can include one or more of different types of measurements, which may be referred to as multi-physics measurements. As an example, multi-physics measurements may include logging while drilling (LWD) measurements and/or wireline measurements. As an example, a method can include joint petrophysical inversion (e.g., inverting) for interpretation of multi-physics logging-while-drilling (LWD) measurements and/or wireline (WL) measurements.

As an example, a method can include estimating static and/or dynamic formation properties from a variety of logging while drilling (LWD) measurements (e.g., including pressure, resistivity, sonic, and nuclear data) and/or wireline (WL) measurements, which can provide for, at least, formation parameters that characterize a formation. As an example, where a method executes during drilling, LWD measurements may be utilized in a joint inversion to output formation parameters (e.g., formation parameter values) that may be utilized to guide the drilling (e.g., to avoid sticking, to diminish one or more types of formation damage, etc.).

In petroleum exploration and development, formation evaluation is performed for interpreting data acquired from a drilled borehole to provide information about the geological formations and/or in-situ fluid(s) that can be used for assessing the producibility of reservoir rocks penetrated by the borehole.

As an example, data used for formation evaluation can include one or more of core data, mud log data, wireline log data (e.g., wireline data) and LWD data, the latter of which may be a source for certain type or types of formation evaluation (e.g., particularly when wireline acquisition is operationally difficult and/or economically unviable).

As to types of measurements, these can include, for example, one or more of resistivity, gamma ray, density, neutron porosity, spectroscopy, sigma, magnetic resonance, elastic waves, pressure, and sample data (e.g., as may be acquired while drilling to enable timely quantitative formation evaluation).

Information from one or more interpretations can be utilized in one or more manners with a system that may be a well construction ecosystem. For example, seismic data may be acquired and interpreted and utilized for generating one or more models (e.g., earth models) for purposes of construction and/or operation of one or more wells.

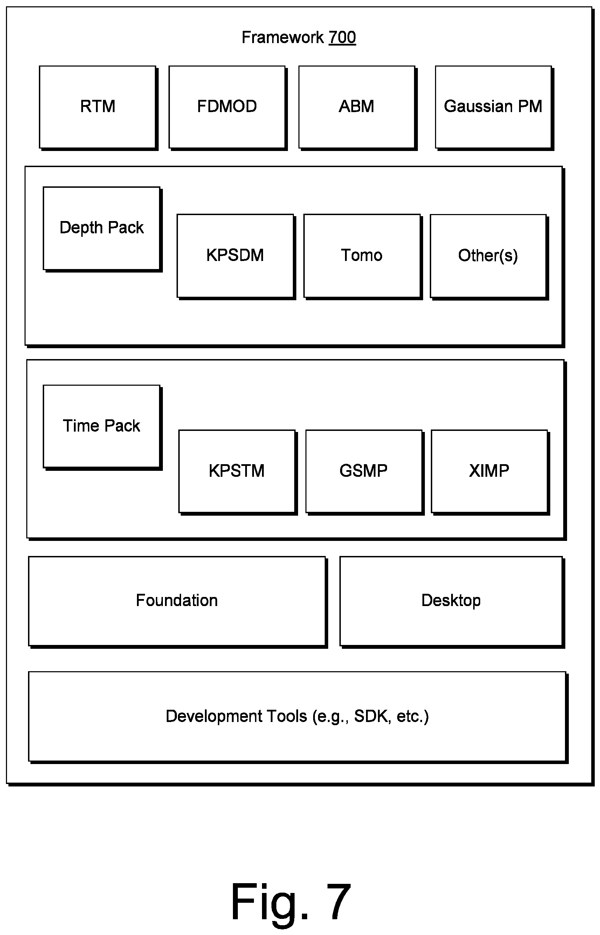

Fig. 7 shows an example of a computational framework 700 that can include one or more processors and memory, as well as, for example, one or more interfaces. The computational framework of Fig. 7 can include one or more features of the OMEGA framework (Schlumberger Limited, Houston, Texas), which includes finite difference modelling (FDMOD) features for two-way wavefield extrapolation modelling, generating synthetic shot gathers with and without multiples. The FDMOD features can generate synthetic shot gathers by using full 3D, two-way wavefield extrapolation modelling, which can utilize wavefield extrapolation logic matches that are used by reverse-time migration (RTM). A model may be specified on a dense 3D grid as velocity and optionally as anisotropy, dip, and variable density.

As shown in Fig. 7, the computational framework 700 includes features for RTM, FDMOD, adaptive beam migration (ABM), Gaussian packet migration (Gaussian PM), depth processing (e.g., Kirchhoff prestack depth migration (KPSDM), tomography (Tomo)), time processing (e.g., Kirchhoff prestack time migration (KPSTM), general surface multiple prediction (GSMP), extended interbed multiple prediction (XIMP)), framework foundation features, desktop features (e.g., GUIs, etc.), and development tools.

The framework 700 can include features for geophysics data processing. The framework 700 can allow for processing various types of data such as, for example, one or more of: land, marine, and transition zone data; time and depth data; 2D, 3D, and 4D surveys; isotropic and anisotropic (TTI and VTI) velocity fields; and multicomponent data.

The framework 700 can allow for transforming seismic, electromagnetic, microseismic, and/or vertical seismic profile (VSP) data into actionable information, for example, to perform one or more actions in the field for purposes of resource production, etc. The framework 700 can extend workflows into reservoir characterization and earth modelling. For example, the framework 700 can extend geophysics data processing into reservoir modelling by integrating with the PETREL framework via the Earth Model Building (EMB) tools, which enable a variety of depth imaging workflows, including model building, editing and updating, depth-tomography QC, residual moveout analysis, and volumetric common-image-point (CIP) pick QC. Such functionalities, in conjunction with the framework's depth tomography and migration algorithms, can produce accurate and precise images of the subsurface. The framework 700 may provide support for field to final imaging, to prestack seismic interpretation and quantitative interpretation, from exploration to development.

As an example, the FDMOD component can be instantiated via one or more CPUs and/or one or more GPUs for one or more purposes. For example, consider utilizing the FDMOD for generating synthetic shot gathers by using full 3D, two-way wavefield extrapolation modelling, the same wavefield extrapolation logic matches that are used by reverse-time migration (RTM). FDMOD can model various aspects and effects of wave propagation. The output from FDMOD can be or include synthetic shot gathers including direct arrivals, primaries, surface multiples, and interbed multiples. The model can be specified on a dense 3D grid as velocity and optionally as anisotropy, dip, and variable density. As an example, survey designs can be modelled to ensure quality of a seismic survey, which may account for structural complexity of the model. Such an approach can enable evaluation of how well a target zone will be illuminated. Such an approach may be part of a quality control process (e.g., task) as part of a seismic workflow. As an example, a FDMOD approach may be specified as to size, which may be model size (e.g., a grid cell model size). Such a parameter can be utilized in determining resources to be allocated to perform a FDMOD related processing task. For example, a relationship between model size and CPUs, GPUs, etc., may be established for purposes of generating results in a desired amount of time, which may be part of a plan (e.g., a schedule) for a seismic interpretation workflow.

As an example, as survey data become available, interpretation tasks may be performed for building, adjusting, etc., one or more models of a geologic environment. For example, consider a vessel that transmits a portion of acquired data while at sea and that transmits a portion of acquired data while in port, which may include physically offloading one or more storage devices and transporting such one or more storage devices to an onshore site that includes equipment operatively coupled to one or more networks (e.g., cable, etc.). As data are available, options exist for tasks to be performed.

Various embodiments of the present disclosure may provide systems, methods, and computer-readable storage media for the interpretation of data into reservoir characterization workflows. As an example, a workflow can include implementing a computational simulator, a field controller, etc. For example, a computational simulator such as a reservoir simulator can generate simulation results as to one or more physical phenomena (e.g., fluid flow, etc.) in a reservoir. As to a field controller, a workflow can include issuing one or more instructions to one or more pieces of field equipment as part of a control process, which may create a bore, deepen a bore, convey a tool in a bore, generate a fracture, reactive an existing fracture, treat a formation (e.g., a wall of a borehole), etc. In certain embodiments, this approach may reduce the time spent on interpretation in reservoir characterization studies while increasing quality and productivity, while reducing cost. A reservoir characterization can be more accurate when utilizing one or more automated interpretation techniques.

Stratigraphy involves the study of the history, composition, relative ages and distribution of strata, and the interpretation of strata to elucidate Earth history for one or more purposes. The comparison, or correlation, of separated strata can include study of their lithology, fossil content, and relative or absolute age, or lithostratigraphy, biostratigraphy, and chronostratigraphy.

Rocks that were formed during the periods of geologic time can be called systems and bear the same names as those of the periods. Hence, rocks of the Permian System were deposited during Permian time or in the Permian Period; rocks of the Cambrian System were formed during the Cambrian Period, etc. It can be useful to assign rocks to smaller divisions. Rocks that are placed within a major division of a system are said to constitute a series, which may be called lower, middle, upper, or which may be given a geographic name. In parts of the geologic section, nomenclature can be utilized to assign strata to still smaller divisions, and hence stages can be used as smaller and/or more local divisions within a series.

A rock-stratigraphic unit or simply stratigraphic unit is a subdivision of rocks that can be delimited on the basis of lithologic characteristics. Rock-stratigraphic units can be divided into groups, formations, members, and beds. A formation is the fundamental unit in this division. A group is the next higher ranking unit and may include two or more formations. A member is a subdivision of a formation. A bed tends to be used as the smallest subdivision in rock-stratigraphic classification.

As to some examples of terms that can be utilized in assessing stratigraphy, consider true vertical thickness, which is the thickness of a bed or rock body measured vertically at a point. As an example, values of true vertical thickness in an area can be plotted and contours drawn to create an isochore map. Another term is true stratigraphic thickness, which is the thickness of a bed or rock body after adjusting for the dip of the bed or body and, for example, deviation of a well that penetrates it. The values of true stratigraphic thickness in an area can be plotted and contours drawn to create an isopach map. An isopach map is a contour map that can connect points of approximately equal thickness. For example, in such a map, isopachs or contours that make up an isopach map can be rendered to a display to show the stratigraphic thickness of a rock unit (e.g., as opposed to the true vertical thickness). Isopachs can be defined as showing the true stratigraphic thicknesses such as the thickness perpendicular to bedding surfaces.

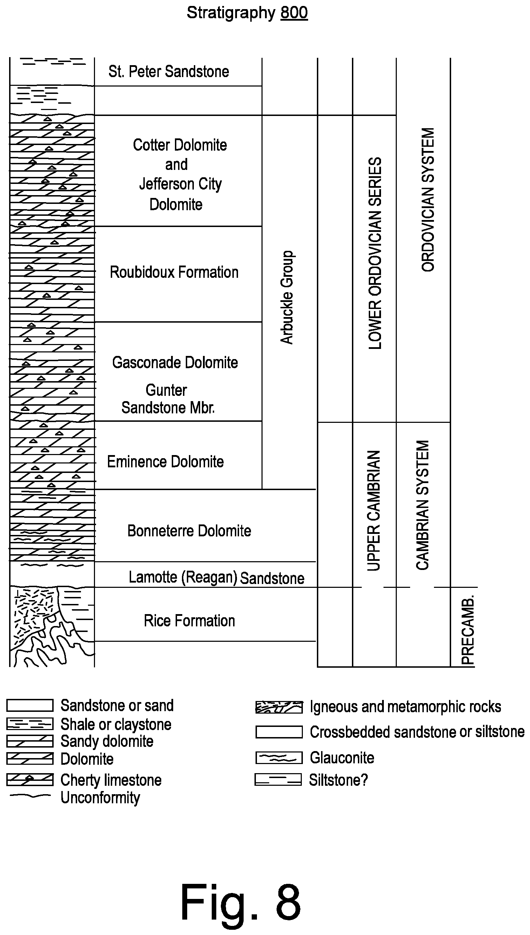

Fig. 8 shows an example of a stratigraphic chart that includes the Arbuckle Group, which is within the Ordovician geologic period and system, being the second of six periods of the Paleozoic Era. The Ordovician spans 41.2 million years from the end of the Cambrian Period 485.4 million years ago (Mya) to the start of the Silurian Period 443.8 Mya.

The Arbuckle Group and equivalent-age rocks (Cambrian and Lower Ordovician) represent a notable record of sediment deposition in the history of the North American continent and they contain substantial accumulations of hydrocarbons (oil and gas) and base metal deposits. Arbuckle rocks thicken from north to south and are up to approximately 660 m (e.g., approximately 1,390 feet) in the southeastern corner of Kansas. Arbuckle Group and equivalent-age rocks from Kansas and surrounding areas are similar, including platform deposits dominated by ramp-type subtidal to peritidal carbonates (mostly dolomitized) which can be subdivided into cycles, less than approximately 0.5 m to approximately 40 m thick, for example, based on facies type and depositional patterns. Depositional facies can include, for example, coarse-grained packstones/ grainstones, fine-grained packstones/wackestones/mudstones, stromatolites-thrombolites, intraclastic conglomerate and breccia, and shale. Secondary features can include dolomitization, breccia, fracture, and conglomerate related to early subaerial exposure and later karst, burial or structural processes, silicification, and local mineralization.

Arbuckle and equivalent strata in the Midcontinent were affected by prolonged subaerial exposure that began immediately after Arbuckle deposition, forming the sub-Tippecanoe to sub-Absaroka unconformity. Favorable reservoir characteristics can be related to basement structural elements and karstic features from the post-Arbuckle subaerial exposure event.

Although most hydrocarbon production in Kansas is from the top of the Arbuckle, the Arbuckle may not be a simple homogeneous reservoir as evidence indicates complex vertical and lateral heterogeneities exist including both nonporous and porous horizons in the formation, and that a high probability exists of locating additional oil with improved reservoir characterization.

Although fracture and vuggy porosity contribute to the production of Arbuckle strata, data indicate a substantial amount of porosity (e.g., about 50%) in some cores is controlled by depositional facies and dolomitization. Studies of Arbuckle and equivalent-age strata from other areas indicate that Arbuckle strata and diagenetic processes are complex and that porosity/permeability patterns are related to a number of processes.

Reservoir characterization through seismic surveys and other data acquisition techniques can provide for improved reservoir characterization, which can include generating one or more models (e.g., earth models, images, etc.) and rendering graphics and/or imagery to a display. For example, a reservoir characterization workflow can be a digital imaging process that transforms seismic data and optionally other data to representations of physical, tangible objects of the Earth, in the Earth. Characterization can include, for example, sedimentologic, stratigraphic, and sequence stratigraphic analyses incorporating core, well log, and seismic data; petrophysical studies; regional and local structural analyses and mapping of details on the contribution of structural features and karst paleogeomorphology to reservoir character; and diagenetic and geochemical studies, for example, focusing on timing of, and processes associated with, dolomitization and karstification events and their contributions to creating or occluding porosity.

As mentioned, for the example stratigraphy 800 of Fig. 8, thicknesses of materials in a stratigraphic unit can be of the order of 1 m or less. As mentioned, the thickness of Arbuckle Group rock can be approximately 660 m. Referring again to seismic survey parameters, given a speed of sound in a medium or media, a sample rate may be converted to an approximate distance. For example, the speed of sound in rock may be on the order of around 5 km per second. Thus, a sample time spacing of approximately 4 ms would correspond to a sample "depth" spacing of about 10 meters (e.g., assuming a path length from source to boundary and boundary to sensor). Such a sample spacing can provide for a resolution of seismic data and hence a seismic image.

Seismic data includes information as to reflectors. A reflector can be an interface between layers of contrasting acoustic properties. Seismic waves can be reflected at such an interface. In seismic data, a reflector might represent a change in lithology, a fault or an unconformity. A reflector can be expressed as a reflection in seismic data. As an example, a seismic survey can have an associated acquisition geometry and acquisition parameters that can determine resolution. Where samples of seismic energy as acquired by one or more seismic energy sensors (e.g., receivers) provide for a depth spacing of about 10 m, a reflector may be interpreted to have a position as to depth that is accurate to within approximately 10 m. As an example, a seismic survey may be configured to provide lesser or greater resolution and hence accuracy. As an example, one or more other data acquisition techniques may be employed to provide data with greater depth or other position accuracy. For example, consider one or more wireline types of techniques, which may be able to provide resolution on the scale of less than 10 m (e.g., optionally sub-meter accuracy as to position).

In various examples, one or more systems, methods, or computer-readable storage media (CRM) are presented that can provide for performing one or more tasks associated with a workflow or workflows that include stratigraphic analysis where, for example, a workflow can include digital image processing and image rendering and/or can include issuing one or more signals to one or more pieces of equipment (e.g., consider a control signal issued via an interface that can control a piece of field equipment).

As an example, a system, a method, and/or CRM can be implemented for identifying one or more stratigraphic units using machine learning. Such an approach may involve doing segmentation of seismic sections of seismic data using deep convolutional neural networks to reduce time demand in interpreting an area of interest of the Earth.

In one or more embodiments, an approach can facilitate identifying stratigraphic units in seismic data by using supervised learning. Seismic interpretation of a new area of interest is not a trivial task and might demand several weeks of interpretation, depending on the size, quality and complexity of the seismic data. An interpreter may perform a workflow utilizing specialized software designed for manual and semi-automated interpretation to speed up the interpretation phase.

Interpretation itself depends on expertise of an interpreter, and manual interpretation has proven sufficient for characterization of subsurface regions of the Earth to aid in the production of hydrocarbons from reservoirs. However, machine learning technology can improve on manual interpretation, particularly in handling the amount of data acquired via one or more seismic surveys. Applying machine learning techniques to accurately identify stratigraphic units in seismic data can provide a substantial reduction in the amount of manual work for interpretation.

In one or more embodiments, a computational imaging framework uses one or more deep convolutional neural networks (CNN) to detect stratigraphic units in images of seismic sections. Such an approach can allow users to gain new insight from seismic data by quickly getting an indication of which stratigraphic units are present in an area of interest. The domain knowledge of seismic interpretation experts can be implicitly captured by a neural network when it is properly trained. In other words, once the neural network has been trained, it can inherit the domain knowledge that has been put into an interpretation by an interpretation expert or experts. The inherited domain knowledge can then be applied to new seismic data, automatically, by a user, etc. As interpretation results may be generated in a lesser amount of time for an area of interest through use of ML (e.g., a trained machine, etc.), various processes may be improved. For example, seismic survey parameters may be adjusted during a seismic survey (e.g., land, marine, etc.), one or more field operations may be adjusted, optionally during a seismic survey, etc.

As an example, a method can include ML assisted seismic image segmentation and stratigraphic sequence interpretation. As an example, such a method can be implemented in a framework such as, for example, the PETREL framework, the OMEGA framework, or another framework that includes one or more processors and memory sufficient for handling seismic data (e.g., volumetric seismic data or "seismic cube" data).

As explained, geological and/or geophysical interpretation of a seismic data cube can involve segmenting a multi-dimensional seismic image into different layers/sequences, highlighting certain geobodies, and/or picking different horizon surfaces, for multiple purposes including, but not limited to, earth model building, velocity model building, stratigraphic analysis, etc. A general approach demands that an interpreter spend substantial effort interacting with a framework and labeling various portions of the seismic data. Such a process can be painstakingly detailed where a single pixel or voxel of seismic data may be identified by eye and labeled. As an example, a ML approach can reduce the amount of effort demanded, for example, by one or more ML processes. For example, consider a first ML process that is trained for a first pass through a seismic cube to generate ML interpretation results followed by a second ML process where an interpreter further refines a portion of the ML interpretations as part of the second ML process where the refinement includes labeling the portion for to train a ML model that can then be applied to one or more other portions of the seismic cube, optionally as the seismic cube prior to the first pass or after the first pass. In such an approach, the interpreter's effort can be limited to a particular portion or portions of a seismic cube as pre-processed with some level of confidence whereby the interpreter's effort improves that level of confidence for applying to one or more other portions of the seismic cube. As an example, a system can provide an interpreter an option to return back to the seismic cube or to utilize a ML "first pass" seismic cube as a starting point for a "second pass" using a ML model that is trained using the interpreter's labeling(s). As an example, a workflow for seismic image/sequence/geobody segmentation and horizon picking can be implemented using a trained ML model and a trainable ML model that demand fewer labels and, hence, reduce an interpreter's workload (or workloads of multiple interpreters).

Seismic image segmentation, geobody segmentation, stratigraphic sequence interpretation and horizon picking from seismic data tends to be a preliminary process for subsurface interpretation and reservoir characterization. For example, an aim can be to generate the most geologically sound annotation and earth model (i.e., a sensor data-based representation of tangible, physical objects). Some examples of processes include sequence extraction, geobody segmentation and horizon picking. A general workflow tends to involve an interpreter's turnaround time to highlight and pick surface/object to build an earth model. Such a workflow may involve some amount of automation, for example, consider automatic horizon tracking where an interpreter picks a pixel and/or a voxel as a seed point and an automated tracking program automatically tracks the horizon that is connected to the seed point using one or more predefined seismic attributes such as amplitude, gradient, etc. Such an approach may generate somewhat questionable results when the seismic survey includes relatively complex geological structures or when the signature of the horizon is weak, which can occur under various circumstances (e.g., poor signal to noise ratio, poor illumination, etc.). Where a signature of a horizon is weak or practically non-existent, a manual approach can be utilized such as manual pixel/voxel-wise labeling of what is considered to be the desired horizon in the seismic cube (e.g., a slice of the cube rendered to a display as an image). Such an approach can be quite time consuming and demand a skilled interpreter to finish the task as the interpreter may have to fill-in gaps using personal knowledge of how geological formations come into existence, change over time, etc. Moreover, the output of such an approach is a horizon surface; not a sequence/geobody that can be directly used by an interpreter to build earth model. A horizon surface can be useful in building an earth model; however, an earth model tends to be three-dimensional and space filing, for example, to be suitable for use in applications such as simulation (e.g., reservoir simulation). Thus, where a horizon is not amenable to ready identification by an automated process, human interpretation will be demanded and that may result in a horizon surface where multiple horizon surfaces are to be utilized to construct an earth model that is space filling and suitable for further use in one or more workflow procedures, etc. Where an interpreter merely outputs horizon surfaces, a workflow generally implements post processing to further segment the seismic cube into sequence/geobody from the horizon surfaces.

Modern machine learning methods, particularly neural networks (NN), may be utilized to process seismic data (e.g., seismic image data) to output better representations of physical, tangible objects that have been seismically imaged (e.g., via one or more seismic surveys). As an example, one or more ML approaches can be implemented to facilitate building of an earth model in a manner that places lesser demands on an interpreter. For example, consider an approach that provides an interpreter with pre-processed seismic data such that decisions can be made in an expedited manner and optionally in a guided manner to identify and label a portion of a seismic cube where that label (e.g., labeling) is utilized to train a specific ML model to be specific to that seismic cube. For example, a pre-processing approach can implement a generic ML model that is trained for generally, optionally for particular types of stratigraphy (e.g., regions of the world), to generate results that can be expeditiously labeled to train (e.g., generate) a specific ML model that can go further than the generic ML model as to resolution, stratigraphy, geobody identification, etc., using a limited set of interpreter generated labels. The output of the specific ML model, as trained using the limited set of interpreter generated labels, can be volumetric structures suitable for earth model building. In such an approach, a system can include a near real-time earth model building, which may be an iterative process. For example, an interpreter may draw on a touchscreen (e.g., using a stylus, a finger, etc.) regions that can be automatically assigned or selectively assigned labels where those labels are consumed by a process that trains a ML model or models. Once the interpreter interprets a portion of a seismic cube, the interpreter may instruct the system via a graphical user interface, etc., to commence training where a resulting trained ML model is immediately applied to one or more other portions of the seismic cube to generate volumetric portions of an earth model, which may be rendered to a display (e.g., representations of physical, tangible objects of the Earth). In such an approach, an interpreter may readily assess the built earth model and determine whether to loop back or to accept and, for example, to allow the trained, specific ML model to process one or more additional portions of the seismic cube. Where a change occurs in stratigraphy, an interpreter may be able to determine that a portion of an earth model could be improved and the interpreter may resort to labeling, for example, to replace or augment the trained, specific ML model. For example, an interpreter may understand that some geologic feature exists within the Earth, as imaged, and that the stratigraphy labeled differs from the stratigraphy associated with that geologic feature (e.g., consider two different plates that abut). In such an example, the earth model as built may appear inaccurate to the eye of the interpreter such that the interpreter can halt the workflow, while accepting a portion of the earth model as being sufficiently accurate and rejecting another portion of the earth model as being inaccurate, to go back to labeling for the portion of the seismic cube that corresponds to the rejected portion of the earth model. As an example, a system can include saving to memory trained, specific ML models in association with a seismic cube. In such an approach, an interpreter may visualize a rendering of an earth model with respect to the trained, specific ML models utilized. In such an approach, an interpreter may decide to refine one or more regions, which may be accomplished by selecting a region, automatically selecting the training data (e.g., as labeled) and adjusting and/or augmenting the training data to retrain a specific ML model for that region, which can then be executed to process the corresponding seismic data, which may generate a refined earth model for that region.

Various approaches may account for a lack of sufficient well-balanced and accurately labelled seismic data. As explained, it can be time consuming and hence costly to develop a large body of labeled seismic data, particularly where variations exist in regions of the world as to reservoir types and characteristics. Some ML approaches for robust horizon interpretation have been curtailed because of cost, practically, variations, etc. Rather than a one-size fits all solution, as an example, a method can utilize a tiered approach where a first tier aims to provide quite general automated interpretation results for a seismic cube that can be refined via interpretation and labeling that focuses on a representative portion of that seismic cube where that labeling can be utilized to train a specific ML model that can be applied to another portion or other portions of the seismic cube. Such an approach can be a tailored approach that achieves adequate results while conserving interpreter time, on both the front end (e.g., using a general trained ML model) and back end (e.g., applying the specific trained ML model to other portions). As mentioned, output can be an earth model that is a volumetric model suitable for use in one or more workflows. As an example, a ML approach can be utilized for seismic image/sequence/geobody segmentation and horizon picking where the ML approach demands a relatively small amount of labels to train a specific ML model and thereby allow the interpreter to build seismic earth models with less effort.

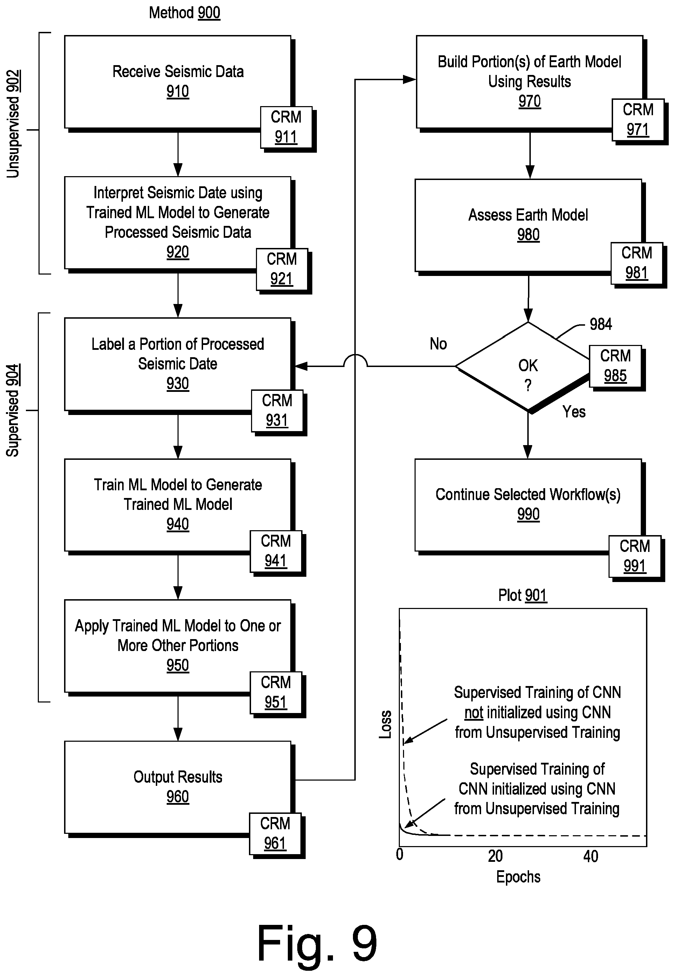

Fig. 9 shows an example of a method 900 and an example of a plot 901. As shown, the method 900 can include an unsupervised portion 902 and a supervised portion 904 where, for example, the unsupervised portion 902 can include a reception block 910 for receiving seismic data and an interpretation block 920 for unsupervised interpretation of the seismic data, for example, using a trained ML model to generate processed seismic data. The output of the unsupervised portion 902 can be utilized in the supervised portion 904. For example, the supervised portion 904 can include initializing a ML model using output of the trained ML model of the unsupervised portion 902. As an example, supervised training (e.g., supervised learning) can be based on output of a trained ML model trained using unsupervised training (e.g., unsupervised learning) and can be based on output of an interactive interpretation process that generates labels for seismic image data.

In the example of Fig. 9, the plot 901 shows an example of loss versus epochs for supervised training of a ML model with (solid line) and without (dashed line) the benefit of a trained ML model as trained using unsupervised learning.

In terms of artificial neural networks as ML models, an epoch refers to one cycle through the training dataset. As shown in the plot 901, training a neural network as a ML model takes more than one epoch. As explained, a method can include building a second ML model from a first ML model. The data in the plot 901 are from examples using the Solsikke seismic dataset, which is a seismic cube from the Solsikke area located in the northern part of the Møre Basin. The Møre Basin is a deep regional Cretaceous sedimentary basin which is located landward of the Møre Marginal High. The Møre Basin dominantly originates from the period of Late Jurassic-Early Cretaceous intra-continental extension and rifting. The Solsikke seismic dataset covers an area of 744 km² with 996 inlines, 1251 crosslines, and 574 samples per trace. A slice of a seismic cube can be denoted by an inline number or a crossline number, which may have numbers that differ from a 0 to total number of inlines or crosslines. As an example, two slices of the Solsikke seismic dataset can include approximately 0.08 percent of the total seismic signal data in the Solsikke seismic dataset.

As to the plot 901, unsupervised learning using the Solsikke seismic cube generated a first trained ML model. That ML model, as trained, posses "knowledge" of the features in the Solsikke seismic cube, which is of considerable size, both in terms of geography and in terms of data size (e.g., computer memory or storage demands). Such unsupervised training can proceed in a manner that is relatively continuous over a period of time and can be augmented through various training data augmentation techniques. Further, such a process can involve updating a ML model, for example, as seismic data may be added to the Solsikke seismic cube (e.g., via new surveys, higher resolution surveys, surveys from 4D studies, etc.). In such an approach, a trained ML model can possess knowledge of structural features in the Solsikke area as evidenced by seismic data. As to supervised training of a second ML model for a selected region within the Solsikke area (e.g., an area within the Møre Basin) for purposes of outputting detailed stratigraphy in the selected region (e.g., generating a stratigraphic earth model of the selected region, etc.), it can be initialized from the trained ML model that has been trained via unsupervised learning using the Solsikke seismic cube. In such an example, the second ML model inherits the prior-known knowledge of the target seismic signals that the first ML model has learned. As demonstrated by the data in the plot 901, such initialization (e.g., inheriting, etc.) reduces the initial loss (e.g., starting loss value) and provides for convergence in fewer epochs when compared to training without such initialization (e.g., without the benefit of the trained ML model that has been trained via unsupervised learning).

As an example, output of a trained ML model, as trained using unsupervised learning, may be utilized for purposes of supervised training of another ML model. In such an example, the output can be for a target region (e.g., a selected region) where a second ML model is to be trained in a supervised manner using such output and labeled seismic image data as generated via an interactive interpretation process. As an example, one or more aspects of a trained ML model, as trained using unsupervised learning, may be utilized in building a trained ML model, as trained using supervised learning. As an example, one or more architectural features may be utilized, one or more weights may be utilized, one or more trained components may be utilized, etc., to initialize a ML model that is trained using supervised learning (e.g., labeled seismic image data from an interactive interpretation process, etc.).

As an example, a method can include selecting a region, processing seismic image data for that region using a trained ML model trained via unsupervised learning and interactively interpreting a portion of the seismic image data to generate labeled seismic image data, and, via supervised learning, training another ML model for the selected region to generate a trained ML model that can predict stratigraphy of the selected region from seismic image data of the selected region. In such an example, the portion of the seismic image data interactively interpreted may be a relatively small percentage of the seismic image data utilized for training the trained ML model as trained via unsupervised learning. As to predictions, such predictions can be "gap filling" in that they at least in part spatially fill in spaces between labeled seismic image data (e.g., unlabeled space); noting that such predictions can also extend outwardly from labeled seismic image data (e.g., unlabeled space). Various approaches may be utilized for building a trained ML model via supervised learning where inheriting, initializing, etc., from a trained ML model, as trained via unsupervised learning, is implemented.

In terms of "how much" data are involved in unsupervised training (e.g., unsupervised learning) and supervised training (e.g., supervised learning), where, in the foregoing example, unsupervised training utilizes the entire Solsikke seismic cube, supervised training may utilize a relatively small percentage (e.g., less than approximately 1 percent, less than approximately 0.5 percent, or less than approximately 0.1 percent).

As explained, a method that leverages unsupervised learning of an entire area can reduce demands as to interpretation (e.g., labeling) for supervised training building of a ML model for a selected region in that entire area where, once trained, that ML model can "fill-in" by prediction unlabeled portions of the selected region (e.g., to generate a stratigraphic model of the selected region). Such a trained ML model can be a type of geological modeler than can model horizons where a sequence of horizons can be a stratigraphic sequence with an associated geologic history (see, e.g., Fig. 8).

As an example, labeling for purposes of supervised learning may be accomplished using various techniques. For example, a so-called "paint-brush" technique can be utilized to annotate seismic image data (e.g., slices, etc.) in a manner that helps to reduce interpreter bias, particularly in zones of interpretational uncertainties due to low seismic quality. In such an example, bias can be reduced where such "paint-brush" strokes aim to annotate a region vertically where such a region may be bounded vertically between features, for example, in a manner that does not demand explicit labeling of those features (e.g., without necessarily to have to "touch" a sequence boundary, etc.). Other techniques can include trace-wise labeling, horizon picking, etc.

As shown in the example of Fig. 9, the supervised portion 904 includes a label block 930 for labeling a portion of the processed seismic data, a training block 940 for training a ML model to generate a trained ML model, and an application block 950 for applying the trained ML model to one or more other portions of the processed seismic data to generate output. As shown, the method 900 can include an output block 960 that output results from the supervised portion 904.

As an example, the method 900 can continue to a build block 970 for building one or more portions of an earth model using at least a portion of the results of the supervised portion 904 of the method 900. As an example, the method 900 can include an assessment block 980 for assessing the earth model, which can continue to a decision block 984, which can make a decision as to whether the earth model is acceptable, if so, the method 900 can continue to a continuation block 990 for continuing with a selected workflow or workflows; whereas, if some portion of the earth model is unacceptable, the method 900 can continue to the label block 930 for labeling, re-labeling, adjusting labels, etc., for one or more portions of the seismic data and/or the processed seismic data (e.g., of the interpretation block 920).

As shown, the method 900 may be implemented in part via one or more computer-readable storage media (CRM) blocks 911, 921, 931, 941, 951, 961, 971, 981, 985 and 991. Such CRM blocks include instructions executable by a processor to instruct a device such as a computing device, a computing system, a controller, etc. A computer-readable storage medium or media (CRM) is or are a non-transitory medium or media that is or are not a carrier wave and not a signal. As an example, the instructions 270 of the system 250 of Fig. 2 can include instructions as in one or more of the CRM blocks 911, 921, 931, 941, 951, 961, 971, 981, 985 and 991.

As an example, a system can include various types of labels and labeling techniques (e.g., annotation techniques, etc.), which may be selectable via one or more graphical user interfaces (GUIs). For example, a GUI may present a menu that includes various input types such as finger or fingers on a touchscreen display, finger or fingers on a trackpad, mouse/trackball, stylus, voice, etc. Such an approach can include accounting for an area such as a minimum area. For example, a stylus may be capable of selecting an area that is relatively small (e.g., a square millimeter) whereas a finger may be larger (e.g., 0.25 square centimeters). As an example, consider a target size for selection by a finger being approximately 5 x 5 mm (e.g., 25 mm²) for index finger usage and approximately 6 x 6 mm (e.g., 36 mm²) for thumb usage. As an example, a menu may be tailored to a type of input and, for example, an ability to zoom a rendering of seismic data to a display. As an example, a system can tailor labels based on resolution of a seismic cube, display resolution, display size, type of tool/input for selecting features in a rendered image. As an example, a system can control a zoom feature with respect to input, whether for zooming in or zooming out, which can help to assure that appropriate tools can provide appropriate labels (e.g., as to areas, etc.) for purposes of appropriate training of a ML model that can be utilized for stratigraphic interpretation.

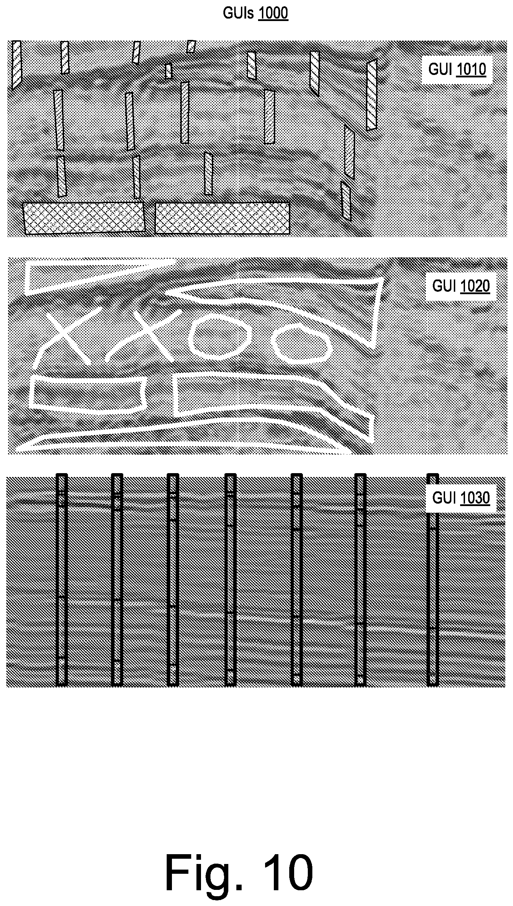

Fig. 10 shows some example GUIs 1000, which include GUI 1010, GUI 1020, and GUI 1030. As shown in the GUI 1010, five different hatchings are utilized, which may be colors, indications as to stratigraphic regions of a two-dimensional image (e.g., a slice) of a seismic cube, which can be a processed seismic cube or a raw seismic cube. In such an example, an interpreter can select an appropriately sized tool such as a paintbrush from a menu that has a minimum width defined with respect to the resolution of the seismic data as rendered to a display to make the selected seismic data suitable for use in training a ML model as labeled by an interpreter. In the example GUI 1010, each of the hatchings (e.g., coded graphics, etc.) represents a different stratigraphic sequence identified by an interpreter. As an example, where seismic data are pre-processed, for example, by an unsupervised model approach, the hatched regions may be automatically assigned by a system (e.g., a stratigraphic system). For example, where an interpreter draws a vertical segment, the drawn graphic may be automatically assigned as corresponding to a pre-processed approach. In such an example, an interpreter may edit the hatching, etc., where, for example, color may be inappropriately assigned in the interpreter's opinion. By editing an automatically assigned graphic style, the interpreter can cause a label to be changed such that a mark (e.g., marking) is associated with a different stratigraphic sequence than the automated, unsupervised process had assigned. Such an approach makes the labeling more specific than that of the unsupervised process, which can, for example, provide for training and generating a specific, trained ML model for the region rendered to the display.

As to the GUI 1020, rather than stripes (e.g., vertical marks or horizontal marks) as in the GUI 1010, the selections include enclosed regions that are "positively" marked and regions that are "negatively" marked. Such an approach can facilitate training through use of positives and negatives as well as distinct regions in the positives. As shown, the negatives can be explicitly associated with particular positives, rather than "all" positives. As shown, a region marked with "X"s and "O"s (e.g., yellow markings, etc.) indicates both positives and negatives. Such regions may be marked via a finger, a mouse, a stylus, etc. As an example, a system can include setting boundaries automatically between markings. Such a system can "understand" that the markings can correspond to different stratigraphy and thereby cause a gap (e.g., a space of pixels, voxels, etc.) between markings as a rule may be imposed that marking are not to overlap. Such an approach can facilitate the generation of labeled training data where the labeled training data can include sets of labeled training data where each set is free from spatial overlap with respect to one or more other sets. In the GUI 1020, various markings can be coded such as, for example, color coded. In such a color coded approach, consider the sets as including an upper left red triangle, an upper right orange triangle, negative crossed out areas in yellow (e.g., where a cross defines a polygon box, etc.), positive circled areas in yellow (e.g., to be distinguished from the negative), a closed green region to the left, a closed green region to the right, and a lower closed blue region. As explained with respect to the GUI 1010, a pre-processed seismic cube can allow for automated coding (e.g., hatching, line style, coloring, etc.). Thus, in the aforementioned example GUI 1020, colors may optionally be automatically assigned as being different or associated. As an example, where an interpreter uses a selected color, if pre-processed seismic data indicates that a region is not properly of that color, it may automatically change a closed marking to a crossed out marking. For example, consider an interpreter making four circles in a selected color of yellow where the pre-processed seismic data indicates that the two circles to the left are not stratigraphically associated with the two circles to the right. In such an example, a system may automatically change the circles to the left to crossed-out indicators or, for example, make them a different color. Such automated adjustments may be subject to interpreter approval and/or edit.

As to the GUI 1030, it shows uniform vertical rectangles (e.g., windows) that span a vertical dimension of the rendered seismic image. In particular seven rectangles are shown where the lateral span of each of the seven rectangles is considerably less than the vertical span in the rendered seismic image such that the data labeled carries sufficient stratigraphy information as to a desired number of layers or possible layers that can be in a sequence or sequences, which may be in accordance with depositional geologic history. As shown, each window includes a series of markings (e.g., coded marks, etc.) as to particular layers of interest as may be determined by an interpreter. The markings may include from top to bottom, in a color coded approach, a blue marked layer, a purple marked layer, a magenta marked layer, a red marked layer, and a yellow marked layer. Thus, each window includes information as to five different layers as evidence in seismic data from a seismic survey of a geological region of the Earth. Each of the markings and each of the windows can act to label a portion of the seismic data for purposes of training a ML model as to sequences.

As shown in the examples of Fig. 10, a sequence can vary in space, for example, as to distance between layers, which may be vertical distance (e.g., true vertical distance in the Earth). As an example, a system can provide for a minimum spacing between windows, which may correspond to one or more parameters of a machine learning model and/or a training process for such a model. For example, a ML model and/or training process may be set with certain parameters that define areas that are assessed, which may be referred to as tiles. As an example, a training process may align tiles with windows or other markings as labeled by an interpreter. In such a manner, there may be assured that a tile (e.g., for training purposes) includes a label. For example, the GUI 1030 may correspond to seven tiles where a tile may optionally be wider than the window width as shown. To expedite processing, a training algorithm may aim to regularize a tile dimension or dimensions using labels (e.g., markings). In such an example, a training process for a ML model can be automatically adjusted based on markings, which may make a training process more efficient in its use of labeled portions of seismic data.

As an example, a GUI may show various colored regions (e.g., and/or other type of coding) as identified by an interpreter where the colors can be ordered vertically as a sequence with respect to a plurality of widthwise positions of the underlying seismic data. In such an example, an interpreter may mark several points in a seismic image, which may be pre-processed using an unsupervised approach, where the points are a basis for segmenting the seismic image into regions that can be vertically stacked to define labels for sequence stratigraphy training of a machine learning model. In such an approach, a training process can segment the labeled data as appropriate for purposes of training a ML model. For example, a training process can automatically select a number of vertical windows that may act to maximize diversity, minimize diversity or achieve a desired amount of diversity. As an example, a training process can include analyzing labels to determine a tile size, which can include a vertical dimension and a widthwise (e.g., horizontal dimension). As an example, tile size may depend on an abrupt feature, for example, in a right half of a seismic image such that tile size is adequate to resolve sequences to the left and to the right of the abrupt features. As an example, an abrupt feature may be a fault, plates, geobody, etc.

As an example, a system can include various conventions as to format of an interpreter's labels. As mentioned, an automated approach may be utilized that depends on the type of input utilized (e.g., finger, stylus, mouse, etc.), on characteristics of seismic data, on characteristics of output from an unsupervised process, on characteristics of a training process, etc. As an example, an interpreter may override an automated selection of a labeling convention, with knowledge that a training process may expect particular label characteristics for efficient training and quality of a generated trained ML model. As an example, an interpreter with more experience may be assigned a particular coding scheme (e.g., colors, etc.) that differ from those available to a less experienced interpreter. In such an approach, a method may include weighting based on coding scheme. For example, consider a first interpreter that is limited to a first color model space and a second interpreter that is limited to a second color model space associated with a high level of experience. As an example, a method can include distinguishing coding (e.g., color, etc.) for weighting markings (e.g., interpretations as labels, etc.) of the more experienced interpreter more heavily.

As an example, an approach can include input labels (training data for supervised learning) to be pixel-wise categorical labels selectively marked on seismic inline and/or crossline slices. The amount of labeled slices can be pre-determined to be of an amount that is suitable for purposes of training. As an example, an amount may correspond to area coverage that is a relatively small percentage of an entire seismic cube. As an example, one or more interpreters, optionally using different technologies as to input, can provide such input labels in one or more formats such as, for example, of bounding boxes, scribble lines or paint-brush swaths. As an example, a system may operate on labels in different formats to harmonize the labels for purposes of training. For example, a system can include receiving labels in different formats and extracting label information and applying that label information to tiles for purposes of training. While multiple interpreters are mentioned, such an approach may be applied to a single interpreter that has selected use of different formats for labels, for example, knowing that certain features are more readily identified using a line approach whereas others are more readily identified using enclosed shapes (e.g., boxes, circles, etc.). As another example, a system may limit format where a single interpreter is or where multiple interpreters are involved such that the label format is uniform.

As explained, selected regions can have different sizes and shapes: they may be in the shape of straight lines, curved lines, cross lines, triangle, rectangle, polygons, circles, or one or more other convenient shapes which the interpreters can easily draw to cover the target sequence/geobody. Interpreters input labels may be simple pointwise labels along different seismic traces (e.g., vertical lines on an inline/crossline image).

The interval between such labeled vertical lines, as well as the density of the lines/paint-brush may vary depending on the complexity of the underlying geology. As an example, complete pixel-wise labeling of the entire inline or crossline image may be an option for an interpreter as a complement of another format approach.

As an example, one or more deep neural networks, with special training procedures, can utilize a relatively small labelled set to perform seismic image/sequence segmentation and horizon picking across one or more other portions of a seismic cube, optionally across an entire seismic cube. As an example, an interpreter may iteratively fine tune a result by providing additional input based on NN model performance and/or geological complexities discovered. Again, the GUIs 1000 of Fig. 10 shows some examples of label types as input formats that may be utilized where, for example, one or more interpreters can mark on a seismic inline/crossline slice rendered to a display using a mouse or other input device.

As an example, a workflow can include multiple stages, which may optionally be performed sequentially or in part simultaneously. For example, some overlap may exist between an unsupervised process and a supervised process for a seismic cube.

As to a two stage process, as an example, consider an unsupervised feature learning/extraction stage and a supervised learning stage. In such an example, output of unsupervised feature learning/extraction, combined with interpreter's input labels, will become the input of supervised learning stage.

As an example, during unsupervised feature learning, a deep neural network (DNN) can identify a comprehensive feature set from seismic data in unsupervised manner (without interpreter's input). In such an example, a supervised learning stage can involve training the DNN with output features obtained from the first stage and interpreter's (or interpreters') input labels. As mentioned, a system can optionally utilize output from an unsupervised process to assist in labeling. As an example, an unsupervised learning stage may be formulated for simpler tasks which can be computationally automated, without special effort on part of the interpreter.

As an example, one or more of various DNN architectures may be applied in an unsupervised learning stage to extract features from seismic data. Some examples include one or more of an auto-encoder, self-learning, filtering, a graphic-based method, etc.

As an example, during a supervised learning stage, one or more slices from inline or crossline direction may be picked by the interpreter to create input labels, for example, in one or more of the above-noted formats. The slices used to generate labels may be selected in a manner so as to provide samples of patterns occurring in a seismic cube. As an example, a DNN can be trained on the input labels from selected slices.

As an example, a workflow can utilize a convolution neural network (CNN). As an example, a trained CNN model can be applied to predict the pixel-wise categorical classes for remaining unlabeled portions of a seismic cube. If input labels provided in a supervised learning stage include slices from both inline and crossline direction, predictions may be generated on both directions and final output calculated based on merging predictions from both directions.

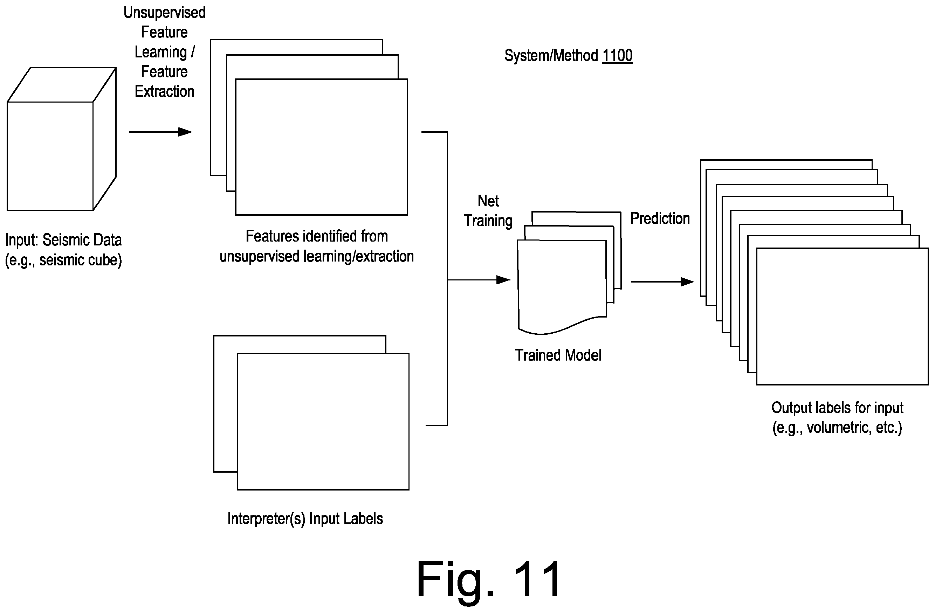

Fig. 11 shows an example of a system and/or method 1100, which includes various processes that can be implemented utilizing one or more computational systems where each includes at least one processor. As mentioned, a workflow may be a multi-interpreter workflow or a single interpreter workflow. As mentioned, a workflow may aim to reduce effort demanded to build an earth model that is a spatial, volumetric model suitable for use in one or more applications (e.g., simulation, field control, etc.).

Fig. 11 shows an input block 1110 for receipt of seismic data as a "cube" with appropriate dimensions in x, y and z; noting that they need not be equal (e.g., the term "cube" as applied to seismic data is to mean volumetric and not necessarily of uniform x, y and z dimensions). While the seismic data may be "raw", it may also be or include seismic data subjected to some amount of processing such as, for example, seismic attribute processing, filtering, normalization, etc.

As shown in the example of Fig. 11, an unsupervised feature extraction process 1120 is applied to the seismic cube, which may optionally include some amount of unsupervised learning to train a ML model or models for performing the automated feature extraction, to generate unsupervised process output 1130. In the example of Fig. 11, the interpreter's input labels are generated per a process 1140, which may or may not include use of features identified in the unsupervised process output 1130. As such, the processes 1120/1130 and 1140 may be linked or not linked, which may mean that, temporally, they may be independent (e.g., not linked) or they may be dependent (e.g., linked). As an example, in a linked approach, the process 1140 may commence when at least a portion of the seismic cube has been processed by the process 1120 (e.g., some amount of output 1130) or, for example, when the entire seismic cube has been processed.

In the example of Fig. 11, the output of the processes 1120 and 1140, as appropriate, can be provided to a system that can perform neural network training per a process 1150 that can generate a trained neural network model 1160 that can be utilized for in a prediction process 1170 to generate output labels for an entire seismic cube 1180 (e.g., or one or more portions thereof that may have not been labeled in the process 1140). As shown, the output 1180 can be volumetric and be a basis for a layered earth model of the region of the Earth that has been seismically imaged to generate the seismic cube as input 1110.

As an example, a workflow can be a dual process workflow where a first process involves self-learning of seismic features by one or more deep CNNs in an unsupervised manner and where a second process involves building a stratigraphy model (e.g., a stratigraphic model) using domain knowledge (e.g., one or more interpreters) where the domain knowledge, as captured in a stratigraphy model building process, is utilized in a supervised process using one or more of the "self-learned" deep CNNs.

As explained, an ability to depict geologic sequences from three-dimensional seismic survey data can be beneficial in a variety of applications, particularly as to subsurface reservoir exploration. As an example, a workflow can be for seismic stratigraphy interpretation by utilizing deep convolutional neural networks (CNNs). For example, a workflow can include the following two components: a seismic feature self-learning (SFSL) component and a stratigraphy model building (SMB) component, each of which can utilize a deep CNN. In such an example, the SMB component can be supervised and of a network architecture that can include one or more features of an image segmentation architecture. As to the SFSL component, it can be unsupervised and, for example, operate without knowledge from one or more domain experts.

As explained, a system can include a SFSL component and a SMB component where a workflow can include initializing a SMB component network from a SFSL component network. In such an approach, the system can allow for inheriting prior-knowledge for understanding target seismic data where, therefore, supervised learning can be efficiently completed by using a relatively small amount of training data. As to the convenience of seismic experts providing training labels, a system may utilize one or more scenarios. For example, consider example scenarios that operate trace-wise, via a graphical approach (e.g., paint-brush, etc.) and/or full-section annotation.

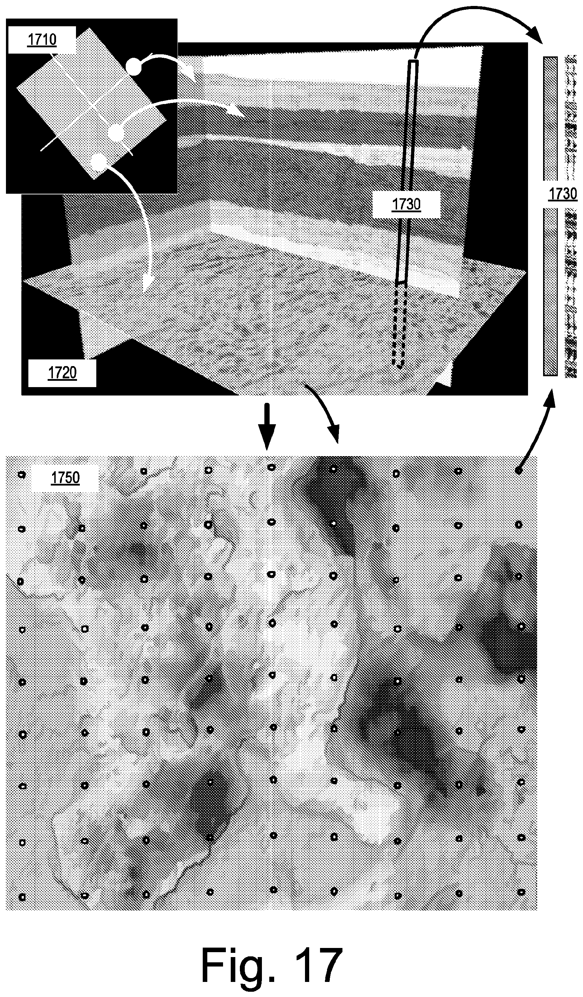

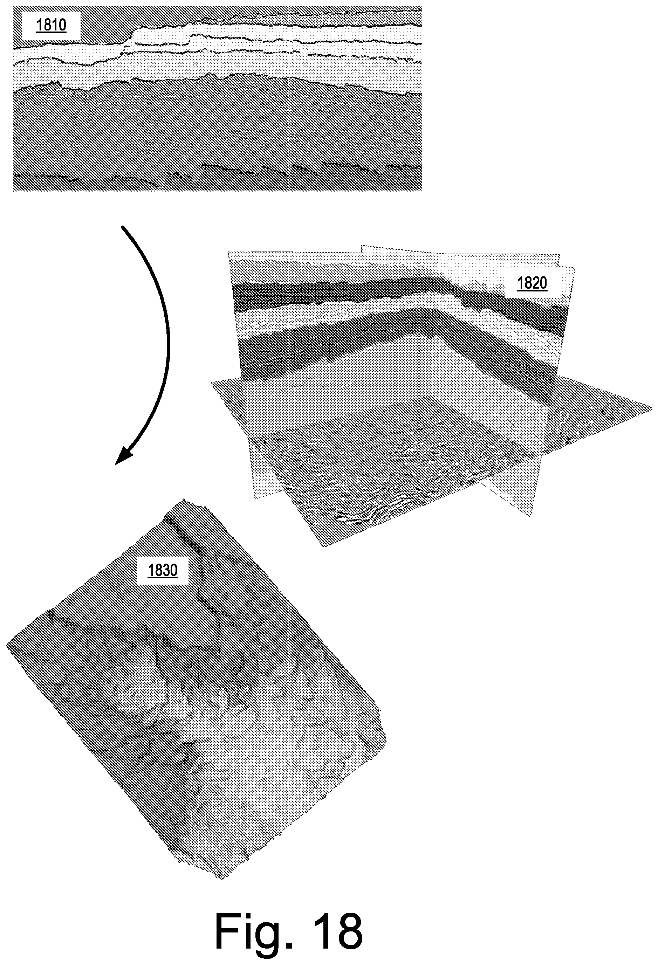

In the examples of Figs. 17 and 18, described in detail further below, performance of a dual component system that involves unsupervised and supervised aspects is demonstrated via application to two real seismic datasets from the North Sea and the Solsikke. The results demonstrate that such a system is capable of providing reliable seismic stratigraphy interpretation and, for example, capable of assisting in various types of other geophysical problems (e.g., geobody detection, etc.).

A dual-approach system (e.g., unsupervised and supervised) can help to address issues such as demand for a large amount of training data to build a reliable interpretation machine; noting that such large amounts of training data are generally not available in the seismic interpretation domain and such data demand considerable effort on behalf of experienced interpreters. Further, a CNN's performance may tend toward overfitting if limited to training data; noting that CNNs demand training data that are fully labeled, which is not always feasible in the seismic domain due to the interpretational uncertainties. Seismic data depend on real-world physics, as explained, quality of seismic signals can decrease with respect to depth, from shallow to deep areas, and, correspondingly, seismic interpreters tend to become less confident in interpretations as signal quality decreases.

As explained, a system can include a SFSL component and a SMB component where a workflow can, given a seismic dataset, utilize the SFSL component in an effort that aims at understanding the features in the seismic dataset by a deep CNN itself, which can be unsupervised without input from seismic interpreters, and utilize a SMB component where a second deep-CNN is built from the SFSL CNN for learning and recognizing the target seismic stratigraphic sequences, which can be supervised, for example, by domain knowledge from an expert to ensure the result accurate and reasonable in geology.

As an example, a system can provide for building an SMB CNN from a SFSL CNN. Such an approach can improve utilization of expert time and effort. Further, by inheriting the prior-known knowledge of the target seismic signals that the SFSL CNN has learned itself, the training of the SMB CNN can start with a lower loss and converge faster.

As explained, use of a SFSL CNN can improve accuracy of stratigraphy interpretation at far distance, where the seismic signals are more and more distinct from training sections. However, a SFSL CNN can have already learned seismic sections, the associated SMB CNN can inherits such knowledge and thereby be capable of making better predictions.

In an example comparison, predictions by a "from scratch" SMB CNN and a "from SFSL" CNN were examined as to an inline number 2500 that is 500 inlines away from the training section. Even though both CNNs converge after the training as demonstrated by their loss curves (see, e.g., the plot 901 of Fig. 9), the SFSL-based one leads to substantial improvement in such far-distance prediction with fewer mis-annotations. Specifically, predictions in the section of inline number 2500 that is 500 inlines away from the training section by the SMB CNN trained from scratch and the SMB CNN trained from the SFSL CNN were compared and, even though both SMB CNNs converge after training (e.g., the SFSL-based one with reduced starting loss and in fewer epochs), the SFSL-based one demonstrates improved far-distance predictions with fewer mis-annotations.

As explained, a dual approach where an unsupervised process can bootstrap a supervised process, a smaller amount of training data may be utilized, faster network training with a lower initial loss may be realized, and substantial improvements in stratigraphy interpretation at far-distance may be realized.

As explained, a system can include various types of features such as input features that can facilitate user input. As explained with respect to Fig. 10, scenarios can include trace-wise, paint-brush, and full-section inputs, which can be selected from the perspective of training data annotation by a seismic interpreter. For example, a paint-brush scenario can allow an interpreter to provide annotation using one or more shapes or orientations, which can help avoid interpreter bias in the zones of interpretational uncertainties. As to the trace-wise scenario, it can facilitate integrating seismic data and well logs, in which reliable well information can be used for calibrating the seismic signals while making stratigraphy interpretation.

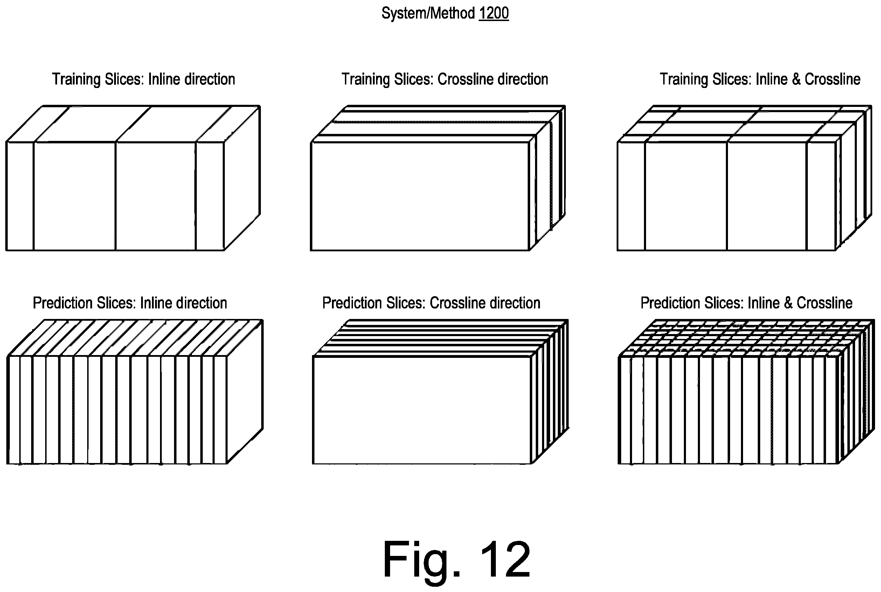

Fig. 12 shows some examples of different scenarios that an interpreter may perform, for example, via the system 1100 of Fig. 11. The scenarios include training slices in an inline direction, prediction of stratigraphic features in slices in an inline direction to generate volumetric output, training slices in a crossline direction, prediction of stratigraphic features in a crossline direction to generate volumetric output, training slices in inline and crossline directions and prediction of stratigraphic features in inline and crossline directions to generate volumetric output.

As mentioned, a workflow can include using a general ML model, generating labels, using the labels to generate a specific ML model and then using the specific ML model to generate output.

As an example, a method can involve a local approach where, for example, training of a neural network system (NNS) is performed on a relatively small portion of a single seismic cube (volumetric seismic data) to generate a trained NNS and where the trained NNS is utilized for prediction on one or more other portions of the single seismic cube.

A provisional application having Serial No. 62/557,746, filed 12 September 2017 ('746 application), and a PCT application that claims priority to and the benefit of the '746 application, entitled "Seismic Image Data Interpretation System", published as WO 2019/055565 A1 on 21 March 2019, are worth mentioning in this regard.

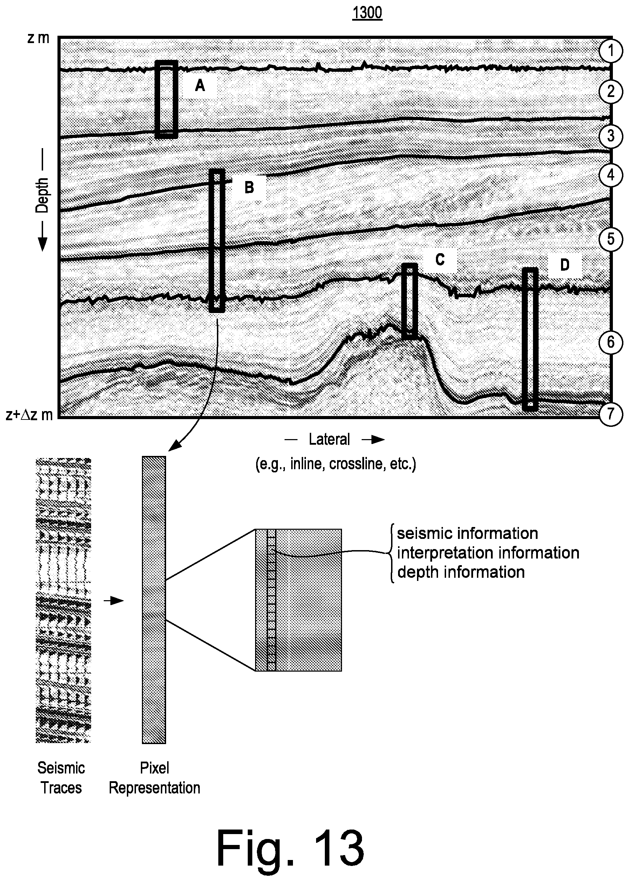

Fig. 13 shows an example of a seismic image 1300 and some examples of windows of seismic data (e.g., windows or tiles of a seismic image, etc.), labeled A, B, C and D. The seismic image 1300 is rendered using seismic image data as a pixel image to a display using a computerized device or system, for example, by accessing seismic image data from a data storage device and processing the seismic image data to be pixels of a desired resolution (e.g., resolution of the display, etc.), which may be adjustable based on resolution of the seismic image date. As an example, for interpretation, selection of training data, etc., the seismic image 1300 may be zoomed in, zoomed out, etc.

As shown in Fig. 13, the seismic image 1300 can be rendered using seismic image data that can be in the form of seismic traces, illustrated approximately in a graphic that includes waveforms of amplitude with respect to depth where traces are acquired with respect to time using seismic acquisition equipment. A trace can be seismic data recorded for one channel where a seismic trace represents the response of an elastic wavefield to velocity and density contrasts across interfaces of layers of rock or sediments as energy travels from a source through the subsurface to a receiver or receiver array.

Amplitude can be defined as the maximum positive or negative deflection of a wave about a zero crossing. The reflection coefficient (R) can be defined as the ratio of amplitude of a reflected wave to an incident wave (e.g., how much energy is reflected). Some example values of R can be approximately -1 from water to air (e.g., water as a medium and air as a medium with an interface therebetween); approximately 0.5 from water to rock; and approximately 0.2 for shale to sand. At non-normal incidence, the reflection coefficient can be defined as a ratio of amplitudes and can depend on one or more other parameters, such as shear velocity (e.g., a function of incident angle defined by the Zoeppritz equations, etc.). As an example, one or more techniques may be utilized to determine pixel values of seismic image data. For example, consider calculating pixel values based on a grayscale (e.g., 0 to 255, 512, 1024, etc.) that ranges from maximum negative deflection to maximum positive deflection. As an example, multiple colors may be utilized for rendering a seismic image (e.g., red for negative amplitude and blue for positive amplitude).

In seismic image data acquisition as a tomographic reflection seismology process, a source transmits wave energy into subsurface. Then, the wave energy propagates and is reflected on one or more boundaries. After that, reflected wave energy propagates to a receiver or receivers (e.g., surface, etc.) and is recorded. For example, consider a receiver that records P wave energy, which includes direct wave energy, reflected wave energy, refracted wave energy and noise. In the oil and gas industry, of particular interest, may be reflected wave energy (e.g., as to one or more reflectors). A geophysicist may process recorded seismic image data in a manner that reduces amplitude effect from one or more other waves. As an example, seismic image data after processing may be classified to be post-stack seismic image data or pre-stack seismic image data. Post-stack seismic image data analyze seismic image data with zero offset amplitude, while pre-stack seismic image data analyze seismic image data with non-zero offset amplitude.

In the example of Fig. 13, a series of vertical elements such as, for example, pixels, etc., are illustrated where at least some of the elements include associated information, which can include information for purposes of training a machine model. As shown, such information can include seismic information (e.g., information of a seismic signal or signals and/or derived from a seismic signal or signals), interpretation information (e.g., a classification or other characterization of what type of material, feature, etc., is at a location), and depth information (e.g., information as to the depth of the location with respect to a reference location). As an example, one or more other types of information may be included such as, for example, seismic acquisition information, seismic attribute information, field, etc.

As to depth, a scale is shown in Fig. 13 ranging from z meters to z + Δz meters. In such an example, z meters can be based on a reference location, which may be, for example, the surface of the Earth. As mentioned, time may be a proxy for depth (e.g., traveltime, etc.). In the example of Fig. 13, various windows (e.g., tiles) may be depth referenced with respect to a common reference location.

As shown, each of the windows has a depth dimension that exceeds a width dimension and each of the windows includes an amount of depth diversity or vertical diversity. As to the window A, it spans the second unit with respect to depth. As to the window B, it spans the fourth and fifth units with respect to depth. As to the window C, it spans the sixth unit with respect to depth. As to the window D, it spans the sixth unit with respect to depth, noting that the stratigraphy of the window C and the stratigraphy of the window D share commonalities while being of different depth spans. As to training a NNS, training data that includes diversity can be diversity with respect to how compacted or expanded material is within a unit. In such an approach, a NNS can be trained to recognize (e.g., identify) a unit regardless of how compacted or expanded it may be. As an example, an interpreter may identify manually a region where a unit varies in its thickness with respect to depth to provide adequate training data as to depth thickness diversity, as a particular type of diversity. Such data may inform a NNS that a unit can appear compacted or expanded yet be the same unit.

As to an example of a NNS, consider a "U" architecture NNS such as, for example, the U-Net architecture NNS. The U-Net can be applied as part of a deep network training method where annotated (e.g., labeled) training samples are utilized to train an NNS. The U-Net is a network and training strategy that can be implemented with use of data augmentation to use available annotated samples more efficiently (e.g., to generate additional training data). The U-Net architecture includes of a contracting path to capture context and a symmetric expanding path that enables precise localization. In an article by Ronneberger et al., entitled "U-Net: Convolutional Networks for Biomedical Image Segmentation" light microscopy images of biological cells (phase contrast and differential interference contrast or DIC) were utilized to train a network end-to-end in a manner that outperformed a sliding-window convolutional network method as to neuronal biological cells in electron microscopic stacks. Ronneberger et al. utilized the trained network for segmentation of biological cell boundaries in 512 x 512 pixel images where a single image took less than a second to process on a computer graphics processing unit (GPU). The article by Ronneberger et al., entitled "U-Net: Convolutional Networks for Biomedical Image Segmentation", The Medical Image Computing and Computer-Assisted Intervention (MICCAI), Springer, LNCS, Vol.9351: 234--241, 2015, available at arXiv:1505.04597, is worth mentioning in this regard.

As an example, a method can include implementing a fully convolutional network. Such a method can include supplementing a contracting network with successive layers where, for example, pooling operators may be replaced by upsampling operators, which can increase the resolution of the output.

As an example, a method can include localizing by combining high resolution features from a contracting path with upsampled output. In such an example, a successive convolution layer can learn to assemble a more precise output based on such information.

As to a "U" shape architecture, an expansive path can be more or less symmetric to a contracting path to yield a "U" shape. A network can be without fully connected layers and can utilize the valid part of each convolution, for example, where a segmentation map includes the pixels for which the full context is available in the corresponding input image. Such an approach can facilitate the seamless segmentation of arbitrarily large images by an overlap-tile strategy.

As an example, with respect to tiling, one or more parameters may be selected or otherwise determined, optionally at the time of interpretation of seismic data. For example, consider the example of Fig. 13 as to windows A, B, C and D being tile windows or tiles.

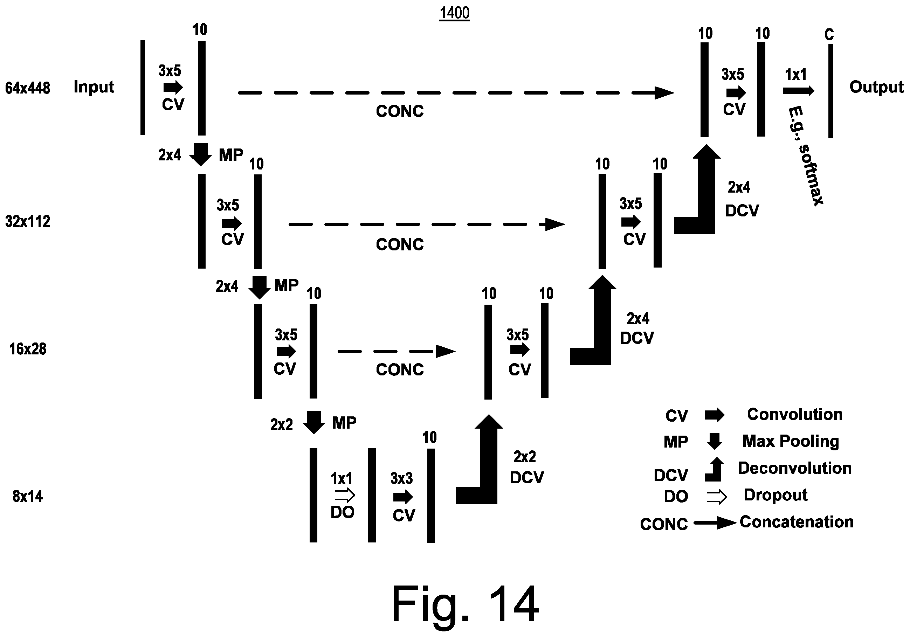

Fig. 14 shows an example of an architecture 1400 that includes a "U" shape, which is due to a contraction downwardly that generally aims to increase what and reduce where and an expansion upwardly that aims to generate a high resolution map. In the example of Fig. 14, a number of feature channels is specified, which is shown to be ten (10); noting that fewer or greater feature channels may be utilized.

Convolution neural networks (CNN) can be described as being a continuation of what may be referred to as multiple layer perceptron (MLP). In an MLP, a core performs simple computations by taking the weighted sum of other cores that serve as input to it. The network may be structured into different layers of cores, where each core in a layer is connected to the other cores in the previous layers. As an example, a CNN architecture can include four kinds of layers: convolutional (conv or CV), rectifying linear unit (ReLU), pooling (pool), and fully connected layer (fcLayer). Each convolutional layer transforms a set of feature maps to another set of feature maps using a convolution operation ⊗ based on a set of filters.

As an example, a convolution neural network system (CNNS) can implement one or more frameworks such as, for example, a computational framework that includes neural network features. As an example, a computational framework can include an analysis engine that can include one or more features of the TENSORFLOW (Google, Mountain View, California) framework, which includes a software library for dataflow programming that provides for symbolic mathematics, which may be utilized for machine learning applications such as artificial neural networks (ANNs), etc.

As an example, the CAFFE framework (Berkeley AI Research, Berkeley, California) may be utilized. The CAFFE framework includes models and optimization defined by configuration where switching between CPU and GPU setting can be achieved via a single flag to train on a GPU machine then deploy to clusters. An implementation of CAFFE can process over 60M images in 24 hours with a single NVIDIA K40 GPU (Nvidia Corporation, Santa Clara, California), which equates to approximately 1 ms/image for inference and 4 ms/image for learning.

As an example, a CNNS can include blocks that provide for convolutions, rectified linearizations (e.g., ReLUs), max poolings, up-convolutions, concatenations and dropouts.

Training of a CNNS to generate a trained CNNS involves determining values of weights (e.g., consider backpropagation, etc.). As an example, a trained CNNS can include various parameters with values determined through training. As an example, a trained CNNS can include an associated data structure or data structures that include information that has been generated via training.

As an example, training can include initialization of weights, which can be tailored such that parts of a network do not give excessive activations, while other parts of the network do not contribute. Initial weights may be adapted such that each feature map in the network has approximately unit variance. For a network with a "U" shaped architecture (e.g., alternating convolution and ReLU layers), this may be achieved by drawing the initial weights from a Gaussian distribution with a standard deviation of SQRT(2/N), where N denotes the number of incoming nodes of one neuron. For example, for a 3x3 convolution and 64 feature channels in a previous layer N = 9*64 = 576.

As mentioned, a neural network such as a convolution neural network (CNN) may be trained by passing in seismic sections (e.g., as tiles) along with labeled stratigraphic units (e.g., training information). Once the neural network has been trained, it can be utilized for prediction on a desired seismic section and output segmented stratigraphic units from the input seismic section.

As an example, a system can include hardware and software that allows for access to a CNN via a web-based interface. For example, a user may access an address via a web browser application or other client application that accesses resources on one or more servers, optionally in a cloud framework (e.g., AZURE framework, etc.). As an example, a workflow can utilize a web application where a user can upload seismic data as input, and the web application displays the results (stratigraphic units) as an overlay over the seismic image. For example, consider a tablet as a mobile computing device that can access the Internet via a network interface to access resources of a system that includes a CNN. In such an example, a user may cause the tablet to execute instructions that instruct the system to train the CNN and/or utilized a trained CNN (a trained version of the CNN).

As an example, a method can include building a training dataset. For example, a training dataset may be a portion of a seismic cube that includes sufficient diversity as to stratigraphy as in stratigraphic units that can be labeled for the purposes of training a CNN to generate a trained CNN. In such an example, the trained CNN can be utilized to process one or more other portions of the seismic cube.

As an example, output from a trained machine model as to stratigraphy can be utilized for model generation and/or revision. Such a model can be more accurate as to one or more layers of material in a region of the Earth. In turn, such a model can provide more accurate guidance as to one or more field operations in the region, which may include a drilling operation that aims to drill to a layer associated with a reservoir for constructing a well to produce fluid from the reservoir. As an example, a method can include identifying a location of a reservoir in a model and drilling to the reservoir based the location.

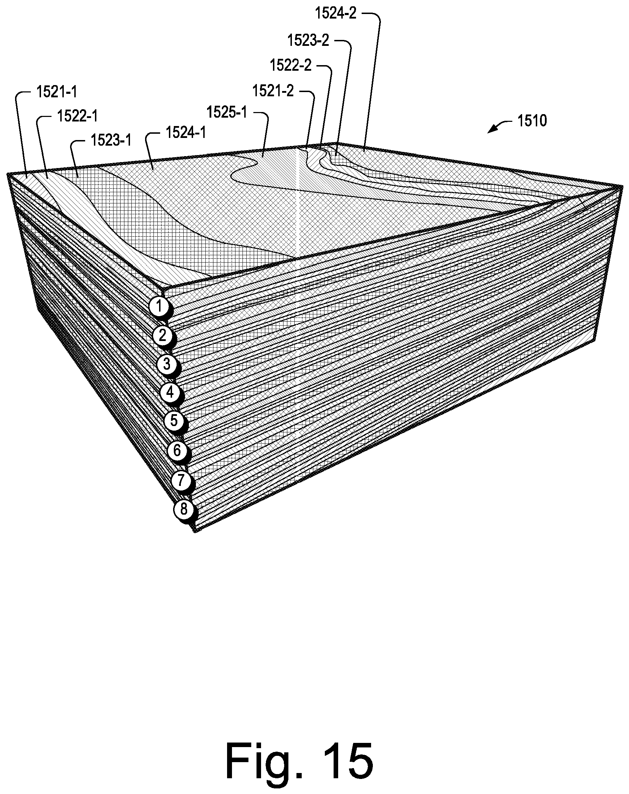

Fig. 15 shows an example of a layered earth model 1510, which may, for example, be described as an implicit function model of a region of the Earth. The layered earth model 1510 is volumetric (e.g., from a seismic cube and optionally other data) and includes layers such as the layers labeled with 1521, 1522, 1523 and 1525 where such layers can be repeating with respect to an implicit function approach and where the layers are ordered in various portions of the model 1510 to correspond to stratigraphy.

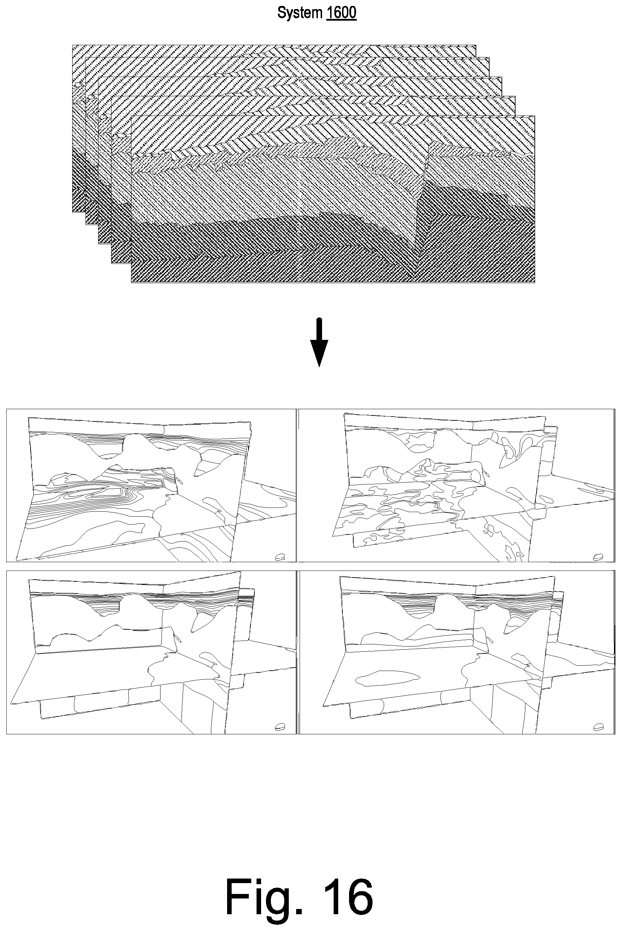

Fig. 16 shows an example of a system 1600 with respect to various examples of renderings of data as processed using a system/method as in Fig. 9, Fig. 11, etc., where output may be rendered using a computational framework such as the PETREL framework, OMEGA framework, OCEAN framework, etc. Such a framework or frameworks can be operatively coupled to one or more displays. As shown in Fig. 16, the renderings may be in the form of one or more graphical user interfaces (GUIs). As an example, the system 1600 may be configured to selectively render one or more GUIs as in Fig. 10 (see, e.g., GUIs 1010, 1020 and 1030) and/or one or more other GUIs (see, e.g., graphics in Fig. 11, Fig. 12, Fig. 13, Fig. 15, Fig. 16, Fig. 17, Fig. 18, etc.).

In Fig. 16, the system 1600 shows a series of graphics that may be labeled output from a trained machine learning model or models. As an example, consider the graphics of the output of the system and/or method 1100 of Fig. 11, which shows seismic image data with color coded labels as to stratigraphy (e.g., stratigraphic units, etc.). Such images/graphics can be utilized to generate a volumetric layered earth model. In the example of Fig. 11, note that the color coding of output 1180 is matched to the color coding of the input labels 1140 (see most forward set of labels) as input for supervised learning. In such an approach, consistency of colors may be utilized to facilitate review, assessment, quality control, etc. For example, an interpreter may readily compare a slice as labeled in input 1140 with a slice with predicted labels as output 1180 as part of a supervised learning interpretation process. As mentioned with respect to Fig. 12, a supervised learning process may utilize one or more types of slices for labeling where output from a trained machine model from the supervised learning process may provide for side-by-side comparison views to match labeled slices to predicted labels in those slices. As an example, another type of slice may be utilized such as a lateral slice that can be a two-dimensional region at depth (e.g., or time). As an example, one or more of inline, crossline and lateral slices may be utilized for labeling and/or output. As mentioned, one or more interpolation techniques may be applied to "connect" labels in various slices, which can, for example, provide for a volumetric layered earth model of a seismically imaged geologic region of the Earth.

As an example, a user may recolor, reassess, etc. various layers for purposes of quality control, layered earth model editing, supplementation using additional seismic data, supplementation using data other than seismic data, etc. Such a system may be utilized to generate a layered earth model as output, optionally including one or more trajectories for wells to one or more reservoirs where a drilling operation, a treatment operation, etc., may be performed in the field using the layered earth model.

As mentioned, a method can include generating a series of outputs of 2D stratigraphic units based on a slice of seismic image data from a seismic cube. In such an example, the method can include interpolating between the series of 2D stratigraphic units to generate a 3D model of stratigraphic units. As to interpolation, linear and/or nonlinear approaches may be implemented. As an example, a spline fitting approach may be implemented where constraints may be imposed, for example, based on output from a slice that may be orthogonal to the series of 2D stratigraphic units. As an example, a method can include generating a series of 2D stratigraphic units along a first dimension and generating a series of 2D stratigraphic units along a second dimension, which may be orthogonal to the first dimension. In such an example, a 3D model of stratigraphic units may be built using the two series (e.g., or more series), optionally using interpolation.

As explained, a workflow can include multiple stages. For example, consider a two stage workflow that includes an unsupervised feature learning/extraction stage and supervised learning stage. In such an example, output of unsupervised feature learning/extraction, combined with interpreters' input labels, can become input of the supervised learning stage. In such an example, a second stage can be initialized using output from a first stage, which as explained can be an unsupervised learning stage that trains a first machine learning model.

As an example, in a first stage, during unsupervised feature learning, a deep neural network (e.g., DNN) can identify a comprehensive feature set from seismic data in unsupervised manner (e.g., without labels, without interpreter input, etc.). As an example, in a second stage, supervised learning stage can involve training a deep neural network (e.g., DNN) with output features obtained from the first stage (e.g., initialization, etc.) and labels acquired via one or more interactive interpretation processes. As explained, such an approach can expedite convergence of a deep neural network, which can help to reduce time, demand for data/labels, etc. As explained, when compared to a workflow that does not include initialization using a trained deep neural network from an unsupervised learning process, the resulting trained deep neural network does not perform as well, particularly for regions at a distance (e.g., "far" regions). As explained, an unsupervised learning stage may be formulated in a manner that can be computationally automated, without reliance on one or more interpreters (e.g., for label input).

One or more types of deep NN architectures may be applied in an unsupervised learning stage to extract features from seismic data. For example, consider one or more of an auto-encoder (e.g., variable auto-encoder, etc.), self-learning, filtering, a graphics-based method, etc.

As an example, during a supervised learning stage, one or more slices from inline or crossline direction may be picked by an interpreter using an interactive interpretation process (e.g., a graphical user interface, etc.) that generates input labels (e.g., in one or more formats). In such an example, slices used to generate labels may be selected in a manner so as to provide samples of patterns occurring in a seismic cube. As an example, a DNN can be trained on the input labels from various selected slices.

As explained, a trained DNN model can be applied to predict the pixel-wise categorical classes for one or more unlabeled portions of a seismic cube. As an example, where input labels provided in a supervised learning stage include slices from both inline direction and crossline direction, predictions can be generated on both directions and final output can be calculated based on merging predictions from both directions.

Fig. 17 shows various graphics 1710, 1720, 1730 and 1750, which can be part of one or more graphical user interfaces (GUIs) of a system that can receive seismic image data of a geologic region and output stratigraphy of the geologic region. For example, the graphic 1710 shows a plan view of an inline and a crossline slice with respect to a horizontal plane where the graphic 1720 shows a three-dimensional representation of two vertical planes (e.g., inline and crossline) with respect to a horizontal plane. In such an example, a trace-wise approach may be utilized that includes inputting seismic traces 1730, which are represented in a pixel-wise manner as seismic image data (e.g., as to underlying amplitude versus time or depth data), where stratigraphy can be output. In such an example, the output stratigraphy may be represented using an inline plane, a crossline plane, a horizontal plane, one or more layers (e.g., one or more horizons, etc.), etc.

In the example of Fig. 17, the two vertical planes of the graphic 1720 may be selected for purposes of interpretation and labeling. For example, given volumetric seismic image data, a user may select various slices that are oriented with respect to depth (e.g., include a depth dimension) and then make markings on those slices as part of an interactive interpretation process where the markings can be utilized as labels in a supervised learning process. Where various slices are selected, in a plan view (e.g., inline-crossline plane), using a trace-wise approach, the interpreted (e.g., marked or labeled) traces may appear as a grid of dots. In such an approach, the grid can be relatively "sparse" compared to the total number of traces where a trained machine model can utilize the traces to predict how at least some of the non-labeled traces would have been marked by an expert. In such an example, the trained machine model "possesses" expert knowledge (e.g., domain knowledge of an interpreter or interpreters, etc.).

In the example of Fig. 17, the graphic 1750 shows a horizon (e.g., a layer) along with dots that represent traces, which may be, for example, labeled traces (see, e.g., the GUI 1030 of Fig. 10). As can be seen in the graphic 1720, a horizon can vary in depth in inline and crossline directions. For example, a horizon can be characterized by dip. As such, a horizon can be a three-dimensional structure, which may be viewed in a plan view and color coded; noting that the graphic 1750 is coded using grayscale. For example, color or other coding can be utilized to represent depth (e.g., z-axis). As illustrated in Fig. 17, the horizon of the graphic 1750 is represented in detail beyond the trace points, which, as mentioned, can be labeled trace points. As explained, a supervised process can leverage an unsupervised process to reduce demand on an interpreter, which can expedite interpretation of seismic data, for example, to provide for representation of one or more horizons that are part of a stratigraphic sequence in a geologic region. As mentioned, stratigraphy can represent geologic history. As an example, output of a trained machine model can include geologic history. For example, consider output sufficient to generate a chart such as the stratigraphic chart of Fig. 8. As an example, a graphical control can be rendered whereby a user can select a region as rendered to a GUI to cause rendering of a chart (e.g., geologic history).

As an example, a workflow can include training a machine model by initializing the machine model using output of a trained machine model as trained using unsupervised learning and then using supervised learning where the supervised learning can include selecting various traces, represented in a pixel-wise manner, and labeling those traces to generate labeled seismic image data, which, in turn, is used to perform supervised learning to generate a trained machine model that is a predictive model that can predict stratigraphy, for example, in regions represented by traces that can be other than the labeled traces (see, e.g., dots in the graphic 1750). In such an example, an interpreter can generate output for traces other than those interpreted. In other words, an interpreter's efforts (e.g., expertise) as to some regions can be automatically "extended" to other regions using a trained machine model, trained via supervised learning and initialized using output from an unsupervised learning process.

Fig. 18 shows various examples of graphics 1810, 1820 and 1830, which may be part of one or more graphical user interfaces (GUIs) rendered to a display. In Fig. 18, a process can include selecting a slice as represented by the graphic 1810, labeling at least a portion of the slice (e.g., seismic image data) and then training a machine model as initialized using another trained machine model (e.g., trained via unsupervised learning) to predict stratigraphy for the entire slice. Such an approach can be applied to volumetric seismic image data, for example, to predict stratigraphy for a volume of a geologic region, for example, as represented by the graphic 1820. As explained, a horizon in a geologic region can be a three-dimensional feature that can be extracted given stratigraphic information for the geologic region. Where a trained machine model can identify (e.g., predict, probabilistically) stratigraphy of a volume of a geologic region, a horizon may be extracted and represented, for example, in a plan view with coding (e.g., color, grayscale, etc.). In Fig. 18, the graphic 1830 represents a horizon in the volumetric region represented in part by the graphic 1820.

As explained, exploration can involve performing one or more seismic surveys to generate seismic data. Such data can be represented in a pixel-wise manner such that one or more approaches to image analysis can be performed. As explained, one approach can be an unsupervised learning approach, which may involve augmentation of seismic image data where such data are input to generate a trained machine model that can be utilized to initialize another machine model to be trained using supervised learning. A workflow that includes two different approaches can be executed in stages where the first stage involves unsupervised and the second stage involves supervised learning. Such an approach can expedite convergence of the supervised learning of the second stage, can reduce demands placed on an interpreter, and can generate a trained machine model that performs better than one that is not initialized using a trained machine model as trained using unsupervised learning.

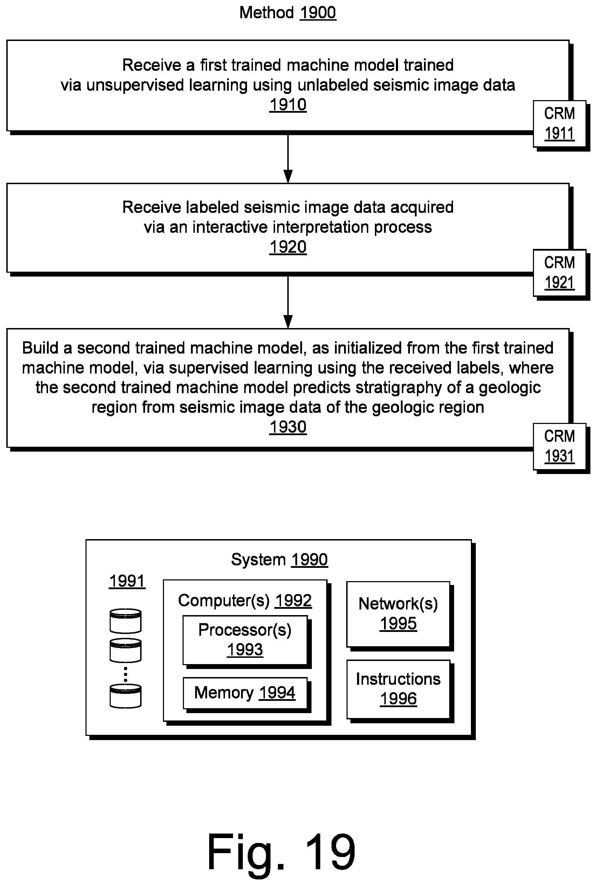

Fig. 19 shows an example of a method 1900 and an example of a system 1900. As shown, the method 1900 can include a reception block 1910 for receiving a first trained machine model trained via unsupervised learning using unlabeled seismic image data; a reception block 1920 for receiving labeled seismic image data acquired via an interactive interpretation process; and a build block 1930 for building a second trained machine model, as initialized from the first trained machine model, via supervised learning using the received labels, where the second trained machine model predicts stratigraphy of a geologic region from seismic image data of the geologic region.

The method 1900 is shown as including various computer-readable storage medium (CRM) blocks 1911, 1921 and 1931 that can include processor-executable instructions that can instruct a computing system, which can be a control system, to perform one or more of the actions described with respect to the method 1900.

In the example of Fig. 19, a system 1990 includes one or more information storage devices 1991, one or more computers 1992, one or more networks 1995 and instructions 1996. As to the one or more computers 1992, each computer may include one or more processors (e.g., or processing cores) 1993 and memory 1994 for storing the instructions 1996, for example, executable by at least one of the one or more processors 1993 (see, e.g., the blocks 1911, 1921 and 1931). As an example, a computer may include one or more network interfaces (e.g., wired or wireless), one or more graphics cards, a display interface (e.g., wired or wireless), etc.

As an example, the method 1900 may be a workflow that can be implemented using one or more frameworks that may be within a framework environment. As an example, the system 1990 can include local and/or remote resources. For example, consider a browser application executing on a client device as being a local resource with respect to a user of the browser application and a cloud-based computing device as being a remote resources with respect to the user. In such an example, the user may interact with the client device via the browser application where information is transmitted to the cloud-based computing device (or devices) and where information may be received in response and rendered to a display operatively coupled to the client device (e.g., via services, APIs, etc.).

As an example, one or more of the GUIs of Fig. 10 may be part of an interactive interpretation system that implements an interactive interpretation process that provides labeled seismic image data for building a trained machine model, for example, using a SMB component that leverages a trained machine model of an SFSL component.

As an example, a method can include receiving seismic image data of a geologic region; performing an unsupervised interpretation process to generate output; and performing a supervised interpretation process, where the supervised interpretation process includes labeling features in a portion of the geologic region, training a machine learning model based at least in part on the labeling of the features to generate a trained machine learning model, and applying the trained machine learning model to generate a layered earth model of the geologic region. In such an example, the method can include rendering the layered earth model to a display as a representation of physical, tangible objects in the geologic region. As an example, a method can transform seismic image data to representations of physical, tangible objects in a geologic region.

As an example, supervised interpretation process can include rendering a portion of the seismic image data to a display and receiving input via a human machine interface to generate labels for the labeling of features where the supervised interpretation process utilizes the labels for the training of the machine learning model.

As an example, a method can include utilizing the output of the unsupervised interpretation process to assist the labeling of features in the portion of the seismic image data in the supervised interpretation process.

As an example, a portion of a geologic region utilized in supervised interpretation for labeling can, volumetrically, be less than 25 percent of the geologic region as seismically imaged.

As an example, the unsupervised interpretation process can include unsupervised learning and unsupervised identification of features.

As an example, the supervised interpretation process can include manual identification of features in the portion of the geologic region.

As an example, the supervised interpretation process can include selecting a format for the labeling of features in the portion of the geologic region.

As an example, the supervised interpretation process can include labeling in at least one of inline slices of the seismic image data and crossline slices of the seismic image data.

As an example, labeling of features can include labeling stratigraphy in the portion of the geologic region where a trained machine learning model identifies stratigraphy in the geologic region.

As an example, a system can include a processor; memory operatively coupled to the processor; and processor-executable instructions stored in the memory to instruct the system to: receive seismic image data of a geologic region; perform an unsupervised interpretation process to generate output; and perform a supervised interpretation process, where the supervised interpretation process includes labeling features in a portion of the geologic region, training a machine learning model based at least in part on the labeling of the features to generate a trained machine learning model, and applying the trained machine learning model to generate a layered earth model of the geologic region.

As an example, one or more computer-readable storage media can include computer-executable instructions executable to instruct a computing system to: receive seismic image data of a geologic region; perform an unsupervised interpretation process to generate output; and perform a supervised interpretation process, where the supervised interpretation process includes labeling features in a portion of the geologic region, training a machine learning model based at least in part on the labeling of the features to generate a trained machine learning model, and applying the trained machine learning model to generate a layered earth model of the geologic region.

As an example, a method can include receiving a first trained machine model trained via unsupervised learning using unlabeled seismic image data; receiving labeled seismic image data acquired via an interactive interpretation process; and building a second trained machine model, as initialized from the first trained machine model, via supervised learning using the received labels, where the second trained machine model predicts stratigraphy of a geologic region from seismic image data of the geologic region. In such an example, the first trained machine model can be or include a convolution neural network and the second trained machine model can be or include a convolution neural network. As an example, a trained machine model can include a U-Net architecture.

As an example, a method can include building a first trained machine model, for example, where unlabeled seismic image data include unlabeled augmented seismic image data.

As an example, a second trained machine model can predict stratigraphy of a geologic region as sequences of a layers of material in the geologic region.

As an example, a second trained machine model can predict geologic history of a geologic region. For example, consider output of information sufficient to generate a stratigraphic chart, which can include labels as to various layers in a stratigraphic sequence where the labels pertain to age (e.g., geological ages, etc.).

As an example, a second trained machine model can predict a stratigraphic Earth model of a geologic region. As an example, such a model may be sufficient to model seismic energy using a velocity model that models velocities of seismic energy in various layers of a stratigraphic sequence.

As an example, a method can include, via a second trained machine model, predicting stratigraphy of a geologic region from seismic image data of the geologic region.

As an example, an interactive interpretation process can include receiving input via a graphical user interface rendered to a display. For example, consider input that includes strokes that include at least one vertical stroke having a vertical dimension that exceeds a horizontal dimension, consider input that includes graphical symbols that include at least one closed-boundary symbol, consider input that includes markings that include at least one positive marking and at least one negative marking, and/or consider input that includes trace-wise markings (e.g., markings within individual traces represented pixel-wise, etc., where such markings can include horizon markings and/or other structural feature markings).

As an example, a method can include initialization of a second machine model by a first trained machine model where such initialization improves convergence during the building of trained machine model from the initialized second machine model. For example, by inheriting the prior-known knowledge of the target seismic signals that a SFSL CNN has learned itself, the training of a SMB CNN can start with a lower loss and converges faster. As an example, initialization from a first trained machine model can reduce demand for labeled seismic image data for convergence during the building of a second trained machine model.

As an example, a method can include receiving labeled seismic image data that can include labeled seismic image data with coded labels, coded based on one or more interpreter criteria. As mentioned, labels from a more experienced interpreter may be weighted more heavily to have a greater impact on supervised training than labels from a less experienced interpreter.

As an example, a system can include a processor; memory operatively coupled to the processor; and processor-executable instructions stored in the memory to instruct the system to: receive a first trained machine model trained via unsupervised learning using unlabeled seismic image data; receive labeled seismic image data acquired via an interactive interpretation process; and build a second trained machine model, as initialized from the first trained machine model, via supervised learning using the received labels, where the second trained machine model predicts stratigraphy of a geologic region from seismic image data of the geologic region.

As an example, one or more computer-readable storage media can include computer-executable instructions executable to instruct a computing system to: receive a first trained machine model trained via unsupervised learning using unlabeled seismic image data; receive labeled seismic image data acquired via an interactive interpretation process; and build a second trained machine model, as initialized from the first trained machine model, via supervised learning using the received labels, where the second trained machine model predicts stratigraphy of a geologic region from seismic image data of the geologic region. In such an example, the one or more computer-readable storage media can be a computer program product. As an example, instructions may be loaded into memory, transmitted over a network or distributed on a data carrier. As an example, a computer program product may be part of a system and/or utilized to in a computer-implemented method.

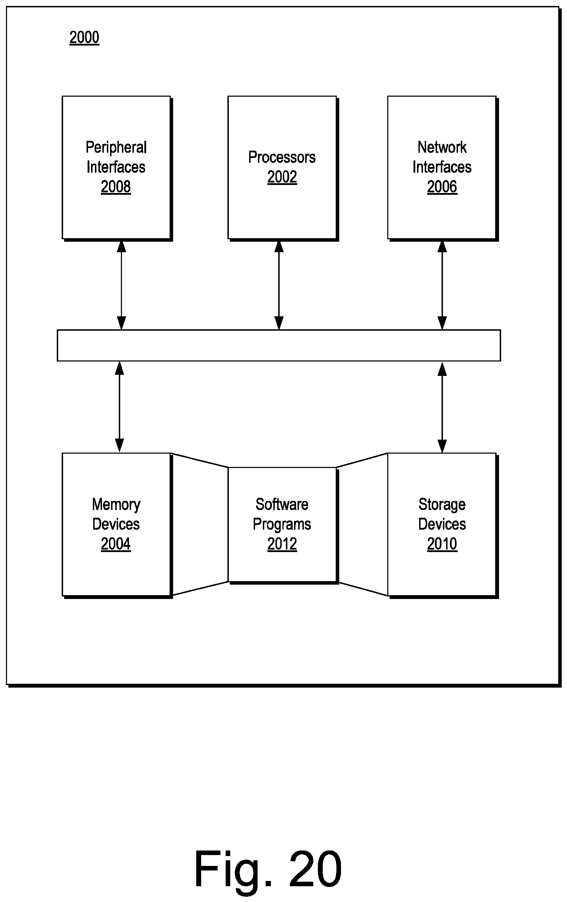

Embodiments of the disclosure may also include one or more systems for implementing one or more embodiments of the method for identifying stratigraphic units using machine learning. Fig. 20 illustrates a schematic view of such a computing or processor system 2000, according to an embodiment. The processor system 2000 may include one or more processors 2002 of varying core configurations (including multiple cores) and clock frequencies. The one or more processors 2002 may be operable to execute instructions, apply logic, etc. It will be appreciated that these functions may be provided by multiple processors or multiple cores on a single chip operating in parallel and/or communicably linked together. In at least one embodiment, the one or more processors 2002 may be or include one or more GPUs.

The processor system 2000 may also include a memory system, which may be or include one or more memory devices and/or computer-readable media 2004 of varying physical dimensions, accessibility, storage capacities, etc. such as flash drives, hard drives, disks, random access memory, etc., for storing data, such as images, files, and program instructions for execution by the processor 2002. In an embodiment, the computer-readable media 2004 may store instructions that, when executed by the processor 2002, are configured to cause the processor system 2000 to perform operations. For example, execution of such instructions may cause the processor system 2000 to implement one or more portions and/or embodiments of the method(s) described above.

The processor system 2000 may also include one or more network interfaces 2006. The network interfaces 2006 may include hardware, applications, and/or other software. Accordingly, the network interfaces 2006 may include Ethernet adapters, wireless transceivers, PCI interfaces, and/or serial network components, for communicating over wired or wireless media using protocols, such as Ethernet, wireless Ethernet, etc.

As an example, the processor system 2000 may be a mobile device that includes one or more network interfaces for communication of information. For example, a mobile device may include a wireless network interface (e.g., operable via one or more IEEE 802.11 protocols, ETSI GSM, BLUETOOTH, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

The processor system 2000 may further include one or more peripheral interfaces 2008, for communication with a display, projector, keyboards, mice, touchpads, sensors, other types of input and/or output peripherals, and/or the like. In some implementations, the components of processor system 2000 are not necessarily enclosed within a single enclosure or even located in close proximity to one another, but in other implementations, the components and/or others may be provided in a single enclosure. As an example, a system may be a distributed environment, for example, a so-called "cloud" environment where various devices, components, etc. interact for purposes of data storage, communications, computing, etc. As an example, a method may be implemented in a distributed environment (e.g., wholly or in part as a cloud-based service).

As an example, information may be input from a display (e.g., a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

The memory device 2004 may be physically or logically arranged or configured to store data on one or more storage devices 2010. The storage device 2010 may include one or more file systems or databases in any suitable format. The storage device 2010 may also include one or more software programs 2012, which may contain interpretable or executable instructions for performing one or more of the disclosed processes. When requested by the processor 2002, one or more of the software programs 2012, or a portion thereof, may be loaded from the storage devices 2010 to the memory devices 2004 for execution by the processor 2002.

The processor system 2000 may also be implemented in part or in whole by electronic circuit components or processors, such as application-specific integrated circuits (ASICs) or field-programmable gate arrays (FPGAs).

The foregoing description of the present disclosure, along with its associated embodiments and examples, has been presented for purposes of illustration. It is not exhaustive and does not limit the present disclosure to the precise form disclosed. Those skilled in the art will appreciate from the foregoing description that modifications and variations are possible in light of the above teachings or may be acquired from practicing the disclosed embodiments.

For example, the same techniques described herein with reference to the processor system 2000 may be used to execute programs according to instructions received from another program or from another processor system altogether. Similarly, commands may be received, executed, and their output returned entirely within the processing and/or memory of the processor system 2000.

As an example, one or more computer-readable storage media can include computer-executable instructions executable to instruct a computing system to perform one or more methods or portions thereof described herein.

As an example, a workflow may be associated with various computer-readable medium (CRM) blocks. Such blocks generally include instructions suitable for execution by one or more processors (or cores) to instruct a computing device or system to perform one or more actions. As an example, a single medium may be configured with instructions to allow for, at least in part, performance of various actions of a workflow. As an example, a computer-readable medium (CRM) may be a computer-readable storage medium that is non-transitory, not a carrier wave and not a signal. As an example, blocks may be provided as one or more sets of instructions, for example, such as the one or more sets of instructions 270 of the system 250 of Fig. 2 (e.g., processor-executable instructions, etc.).

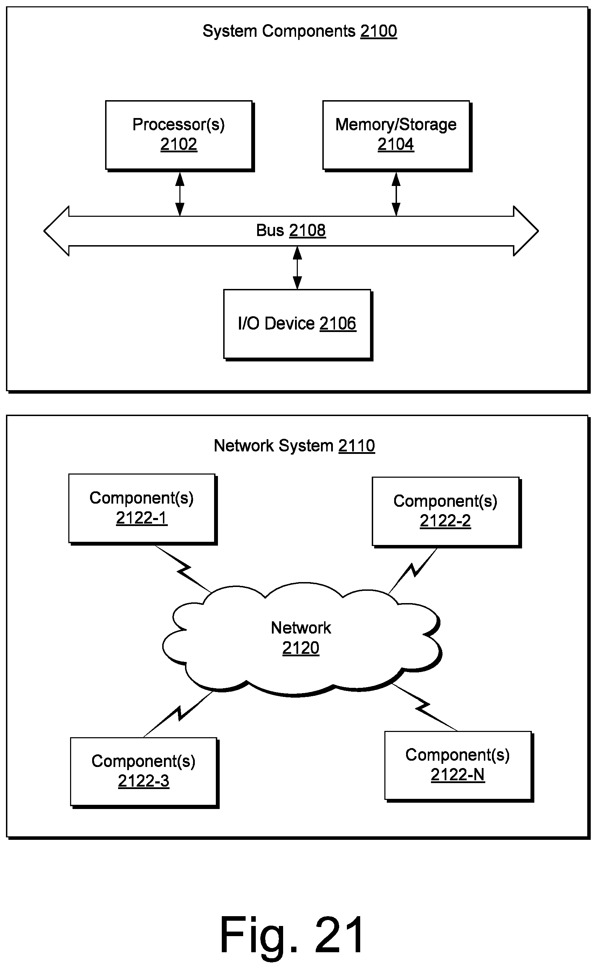

Fig. 21 shows components of an example of a computing system 2100 and an example of a networked system 2110. The system 2100 includes one or more processors 2102, memory and/or storage components 2104, one or more input and/or output devices 2106 and a bus 2108. In an example embodiment, instructions may be stored in one or more computer-readable media (e.g., memory/storage components 2104). Such instructions may be read by one or more processors (e.g., the processor(s) 2102) via a communication bus (e.g., the bus 2108), which may be wired or wireless. The one or more processors may execute such instructions to implement (wholly or in part) one or more attributes (e.g., as part of a method). A user may view output from and interact with a process via an I/O device (e.g., the device 2106). In an example embodiment, a computer-readable medium may be a storage component such as a physical memory storage device, for example, a chip, a chip on a package, a memory card, etc. (e.g., a computer-readable storage medium).

In an example embodiment, components may be distributed, such as in the network system 2110. The network system 2110 includes components 2122-1, 2122-2, 2122-3, ... 2122-N. For example, the components 2122-1 may include the processor(s) 2102 while the component(s) 2122-3 may include memory accessible by the processor(s) 2102. Further, the component(s) 2122-2 may include an I/O device for display and optionally interaction with a method. The network may be or include the Internet, an intranet, a cellular network, a satellite network, etc.

Although only a few example embodiments have been described in detail above, those skilled in the art will readily appreciate that many modifications are possible in the example embodiments within the scope of the following claims.

## Claims

1. A computer-implemented method (1900) comprising:
receiving a first trained machine model, trained via unsupervised learning, wherein the first trained machine model comprises a convolution neural network configured to extract features from unlabeled seismic image data (1910) of a geological region, wherein the seismic image data is in the form of a seismic cube;
receiving labeled seismic image data acquired via an interactive interpretation process (1920), wherein the labeled seismic data comprise pixel-wise categorical labels selectively marked on selected inline and/or crossline slices of the seismic cube, the slices being selected by the interpreter so as to provide samples of patterns occurring in the seismic image data; and
building a second trained machine model, using an output from the first trained machine model and the received labels as input, wherein the second trained machine model comprises a convolution neural network configured to predict pixel-wise categorical classes for the remaining unlabeled portions of the seismic cube and to generate a stratigraphic model that predicts stratigraphy of the geologic region (1930).

2. The method of claim 1, wherein at least the second trained machine model comprises a U-Net architecture.

3. The method of claim 1, comprising building the first trained machine model.

4. The method of claim 3, wherein the unlabeled seismic image data comprise unlabeled augmented seismic image data.

5. The method of claim 1, wherein the second trained machine model predicts stratigraphy of the geologic region as sequences of a layers of material in the geologic region.

6. The method of claim 1, wherein the second trained machine model predicts geologic history of the geologic region.

7. The method of claim 1, wherein the second trained machine model predicts a stratigraphic Earth model of the geologic region.

8. The method of claim 1, comprising, via the second trained machine model, predicting stratigraphy of a geologic region from seismic image data of the geologic region.

9. The method of claim 1, wherein the interactive interpretation process comprises receiving input via a graphical user interface rendered to a display.

10. The method of claim 9, wherein the input comprises one or more of strokes that comprise at least one vertical stroke having a vertical dimension that exceeds a horizontal dimension; graphical symbols that comprise at least one closed-boundary symbol; markings that comprise at least one positive marking and at least one negative marking; and trace-wise markings.

11. The method of claim 1, wherein the labeled seismic image data acquired via the interactive interpretation process (1920) comprises less than 1 percent of the seismic cube.

12. The method of claim 1, wherein the received labeled seismic image data comprise coded labels, coded based on one or more interpreter criteria.

13. A system (1990) comprising:
a processor (1993);
memory (1994) operatively coupled to the processor; and
processor-executable instructions (1996) stored in the memory to instruct the system to perform the steps of the method of any preceding claim.

14. One or more computer-readable storage media comprising computer-executable instructions executable to instruct a computing system to perform a method according to any of claims 1 to 12.

## Patentansprüche

1. Computerimplementiertes Verfahren (1900), umfassend:
Empfangen eines ersten trainierten Maschinenmodells, das über unüberwachtes Lernen trainiert wird, wobei das erste trainierte Maschinenmodell ein neuronales Faltungsnetz, das konfiguriert ist, um Merkmale aus nicht gekennzeichneten seismischen Bilddaten (1910) einer geologischen Region zu extrahieren, umfasst, wobei die seismischen Bilddaten in der Form eines seismischen Würfels vorliegen;
Empfangen gekennzeichneter seismischer Bilddaten, die über einen interaktiven Interpretationsprozess (1920) erfasst werden, wobei die gekennzeichneten seismischen Daten pixelweise kategorische Kennzeichen, die auf selektierten Inline- und/oder Crossline-Slices des seismischen Würfels selektiv markiert sind, umfassen, wobei die Slices durch den Interpretierer selektiert werden, um Proben von Mustern, die in den seismischen Bilddaten auftreten, bereitzustellen; und
Aufbauen eines zweiten trainierten Maschinenmodells unter Verwendung einer Ausgabe aus dem ersten trainierten Maschinenmodell und der empfangenen Kennzeichen als Eingabe, wobei das zweite trainierte Maschinenmodell ein neuronales Faltungsnetz umfasst, das konfiguriert ist, um pixelweise kategorische Klassen für die verbleibenden nicht gekennzeichneten Abschnitte des seismischen Würfels vorherzusagen und um ein stratigrafisches Modell, das die Stratigrafie der geologischen Region (1930) vorhersagt, zu erzeugen.

2. Verfahren nach Anspruch 1, wobei mindestens das zweite trainierte Maschinenmodell eine U-Net-Architektur umfasst.

3. Verfahren nach Anspruch 1, umfassend das Aufbauen des ersten trainierten Maschinenmodells.

4. Verfahren nach Anspruch 3, wobei die nicht gekennzeichneten seismischen Bilddaten nicht gekennzeichnete erweiterte seismische Bilddaten umfassen.

5. Verfahren nach Anspruch 1, wobei das zweite trainierte Maschinenmodell Stratigrafie der geologischen Region als Sequenzen von Materialschichten in der geologischen Region vorhersagt.

6. Verfahren nach Anspruch 1, wobei das zweite trainierte Maschinenmodell geologische Geschichte der geologischen Region vorhersagt.

7. Verfahren nach Anspruch 1, wobei das zweite trainierte Maschinenmodell ein stratigrafisches Erdmodell der geologischen Region vorhersagt.

8. Verfahren nach Anspruch 1, umfassend, über das zweite trainierte Maschinenmodell, das Vorhersagen von Stratigrafie einer geologischen Region aus seismischen Bilddaten der geologischen Region.

9. Verfahren nach Anspruch 1, wobei der interaktive Interpretationsprozess das Empfangen von Eingaben über eine grafische Benutzeroberfläche, die auf einer Anzeige bildlich dargestellt wird, umfasst.

10. Verfahren nach Anspruch 9, wobei die Eingabe einen oder mehrere Striche umfasst, die mindestens einen vertikalen Strich umfassen, der eine vertikale Dimension, die eine horizontale Abmessung überschreitet, aufweist; grafische Symbole, die mindestens ein Symbol geschlossener Begrenzung umfassen; Markierungen, die mindestens eine positive Markierung und mindestens eine negative Markierung umfassen; und spurweise Markierungen.

11. Verfahren nach Anspruch 1, wobei die gekennzeichneten seismischen Daten, die über den interaktiven Interpretationsprozess (1920) erfasst werden, weniger als 1 Prozent des seismischen Würfels umfassen.

12. Verfahren nach Anspruch 1, wobei die empfangenen gekennzeichneten seismischen Bilddaten codierte Kennzeichen, die basierend auf einem oder mehreren Interpretiererkriterien codiert werden, umfassen.

13. System (1990), umfassend:
einen Prozessor (1993);
einen Speicher (1994), der mit dem Prozessor wirkgekoppelt ist; und
prozessorausführbare Anweisungen (1996), die in dem Speicher gespeichert sind, um das System anzuweisen, die Schritte des Verfahrens nach einem der vorstehenden Ansprüche durchzuführen.

14. Ein oder mehrere computerlesbare Speichermedien, umfassend computerausführbare Anweisungen, die ausführbar sind, um ein Computersystem anzuweisen, ein Verfahren nach einem der Ansprüche 1 bis 12 durchzuführen.

## Revendications

1. Procédé (1900) mis en œuvre par ordinateur, comprenant :
la réception d'un premier modèle de machine entraîné, entraîné par le biais d'un apprentissage non supervisé, dans lequel le premier modèle de machine entraîné comprend un réseau neuronal à convolution configuré pour extraire des caractéristiques de données d'image sismique non étiquetées (1910) d'une région géologique, dans lequel les données d'image sismique se présentent sous la forme d'un cube sismique ;
la réception de données d'image sismique étiquetées acquises par l'intermédiaire d'un processus d'interprétation interactif (1920), dans lequel les données sismiques étiquetées comprennent des étiquettes catégorielles par pixel marquées sélectivement sur des tranches en ligne et/ou en croix sélectionnées du cube sismique, les tranches étant sélectionnées par l'interprète de manière à fournir des échantillons de motifs se produisant dans les données d'image sismique ; et
la construction d'un second modèle de machine entraîné, à l'aide d'une sortie du premier modèle de machine entraîné et les étiquettes reçues en entrée, dans lequel le second modèle de machine entraîné comprend un réseau neuronal à convolution configuré pour prédire des classes catégorielles par pixel pour les parties non étiquetées restantes du cube sismique et pour générer un modèle stratigraphique qui prédit la stratigraphie de la région géologique (1930).

2. Procédé selon la revendication 1, dans lequel au moins le second modèle de machine entraîné comprend une architecture U-Net.

3. Procédé selon la revendication 1, comprenant la construction du premier modèle de machine entraîné.

4. Procédé selon la revendication 3, dans lequel les données d'image sismique non étiquetées comprennent des données d'image sismique augmentées non étiquetées.

5. Procédé selon la revendication 1, dans lequel le second modèle de machine entraîné prédit la stratigraphie de la région géologique en tant que séquences d'une couche de matériau dans la région géologique.

6. Procédé selon la revendication 1, dans lequel le second modèle de machine entraîné prédit l'histoire géologique de la région géologique.

7. Procédé selon la revendication 1, dans lequel le second modèle de machine entraîné prédit un modèle stratigraphique de la Terre de la région géologique.

8. Procédé selon la revendication 1, comprenant, par l'intermédiaire du second modèle de machine entraîné, la prédiction de la stratigraphie d'une région géologique à partir de données d'image sismique de la région géologique.

9. Procédé selon la revendication 1, dans lequel le processus d'interprétation interactive comprend la réception d'entrées par l'intermédiaire d'une interface utilisateur graphique restituée sur un dispositif d'affichage.

10. Procédé selon la revendication 9, dans lequel l'entrée comprend un ou plusieurs des traits qui comprennent au moins un trait vertical ayant une dimension verticale qui dépasse une dimension horizontale ; des symboles graphiques qui comprennent au moins un symbole à frontière fermée ; des marques qui comprennent au moins une notation positive et au moins une notation négative ; et des marquages dans le sens des traces.

11. Procédé selon la revendication 1, dans lequel les données d'image sismique étiquetées acquises par l'intermédiaire du processus d'interprétation interactif (1920) comprennent moins de 1 pour cent du cube sismique.

12. Procédé selon la revendication 1, dans lequel les données d'image sismique étiquetées reçues comprennent des étiquettes codées, codées sur la base d'un ou plusieurs critères d'interprétation.

13. Système (1990) comprenant :
un processeur (1993) ;
une mémoire (1994) couplée fonctionnellement au processeur ; et
des instructions exécutables par processeur (1996) stockées dans la mémoire pour ordonner au système d'effectuer les étapes du procédé selon une quelconque revendication précédente.

14. Support ou supports de stockage lisibles par ordinateur comprenant des instructions exécutables par un ordinateur pour ordonner à un système informatique de mettre en œuvre un procédé selon l'une quelconque des revendications 1 à 12.
